# EUROPEAN PATENT APPLICATION

(11) **EP 4 730 668 A2**
(43) Date of publication of application: **22.04.2026**
(21) Application number: 26162462.1
(22) Date of filing: 27.01.2022
(51) Int. Cl.: H04B 7/06

(54) **UPLINK REFERENCE SIGNAL CONFIGURATION AND INDICATION FOR UPLINK ANTENNA PANEL SELECTION**

(62) Divisional of application: 22922708.7
(71) Applicant: QUALCOMM Incorporated, San Diego, CA 92121-1714 (US)
(72) Inventor: YUAN, Fang, San Diego, 92121-1714 (US); ZHOU, Yan, San Diego, 92121-1714 (US); LUO, Tao, San Diego, 92121-1714 (US); LI, Junyi, San Diego, 92121-1714 (US)
(74) Representative: Tomkins & Co

(57) **Abstract**

An apparatus equipped with multiple antenna panels for wireless communication is provided. The apparatus indicates a maximum supported number of uplink reference signal ports for multiple antenna panels associated with different TRPs to facilitate fast antenna panel selection for the apparatus. In some aspects, the apparatus transmits a plurality of capability value sets associated with at least two antenna panels, wherein each capability value set in the plurality of capability value sets indicates at least a different maximum number of uplink reference signal ports for an antenna panel of the at least two antenna panels. The apparatus further transmits a message indicating one or more of the plurality of capability value sets for a group of reference signal beams received from a plurality of TRPs.

## Description

### BACKGROUND

### Technical Field

The present disclosure relates generally to communication systems, and more particularly, to an uplink reference signal configuration and indication for uplink antenna panel selection.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (e.g., with Internet of Things (IoT)), and other requirements. 5G NR includes services associated with enhanced mobile broadband (eMBB), massive machine type communications (mMTC), and ultra reliable low latency communications (URLLC). Some aspects of 5G NR may be based on the 4G Long Term Evolution (LTE) standard. There exists a need for further improvements in 5G NR technology. These improvements may also be applicable to other multi-access technologies and the telecommunication standards that employ these technologies.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

A user equipment (UE) equipped with multiple antenna panels may communicate with multiple transmission reception points (TRPs). In some examples, the multiple TRPs may be associated with a same base station or with different base stations. In some examples, each antenna panel of the UE may support a certain number of antenna ports (e.g., for transferring different spatial layers in multiple-input and multiple-output (MIMO) communications) with respect to a TRP based on channel conditions. The UE may indicate the number of supported antenna ports with respect to a single TRP to facilitate antenna panel selection for the UE at the network side (e.g., at a base station associated with one or more of the multiple TRPs).

For the case of multiple antenna panels and multiple TRPs, however, the UE may need to indicate the maximum supported number of uplink reference signal ports for multiple antenna panels associated with different TRPs to facilitate fast antenna panel selection for the UE at the network side (e.g., at a base station associated with one or more of the multiple TRPs). The aspects described herein enable a UE to transmit a capability information message including a plurality of capability value sets associated with the at least two antenna panels, wherein each capability value set in the plurality of capability value sets indicates at least a different maximum number of uplink reference signal ports (e.g., sounding reference signal (SRS) ports) for an antenna panel of the at least two antenna panels. The UE transmits a capability indication message indicating one or more of the plurality of capability value sets for a group of reference signal beams received from a plurality of TRPs.

In an aspect of the disclosure, a method, a computer-readable medium, and an apparatus are provided. A first apparatus for wireless communication receives a capability information message including a plurality of capability value sets associated with at least two antenna panels at a user equipment (UE), wherein each capability value set in the plurality of capability value sets indicates at least a different maximum number of uplink reference signal ports for an antenna panel of the at least two antenna panels, and receives a capability indication message indicating one or more of the plurality of capability value sets for a group of reference signal beams transmitted from the first apparatus and a second apparatus.

In some examples, the one or more of the plurality of capability value sets includes a capability value set that applies to the first apparatus and the second apparatus. For example, the first apparatus may be a first TRP and the second apparatus may be a second TRP.

In some examples, the one or more of the plurality of capability value sets includes a first capability value set that applies to the first apparatus, and a second capability value set that applies to the second apparatus.

In some examples, the capability indication message includes one or more capability value set identifiers. Each capability value set in the plurality of capability value sets further indicates at least one of a maximum uplink rank or a coherence type associated with the group of reference signal beams received from the first apparatus and the second apparatus.

In some examples, the capability information message further indicates support for symmetric antenna panels or asymmetric antenna panels at the UE for a beam reporting operation.

In some examples, the first apparatus transmits a configuration message that configures the UE to transmit a single capability value set that applies to the first apparatus and the second apparatus, or to transmit a first capability value set that applies to the first apparatus and a second capability value set that applies to the second apparatus.

In some examples, the first apparatus transmits, for each bandwidth part allocated to the UE, a plurality of reference signal resource sets for the first apparatus and the second apparatus in response to the capability indication message.

In some examples, the plurality of reference signal resource sets includes a first plurality of reference signal resource sets associated with the first apparatus, and a second plurality of reference signal resource sets associated with the second apparatus.

In some examples, each of the first plurality of reference signal resource sets includes a different maximum number of uplink reference signal ports for an antenna panel of the at least two antenna panels, and wherein one of the first plurality of reference signal resource sets is active at a time.

In some examples, each of the second plurality of reference signal resource sets includes a different maximum number of uplink reference signal ports for an antenna panel of the at least two antenna panels, and wherein one of the second plurality of reference signal resource sets is active at a time.

In some examples, the plurality of reference signal resource sets includes a first reference signal resource set associated with the first apparatus, wherein the first reference signal resource set includes a first plurality of reference signal resource lists, and a second reference signal resource set associated with the second apparatus, wherein the second reference signal resource set includes a second plurality of reference signal resource lists.

In some examples, each of the first plurality of reference signal resource lists includes a different maximum number of uplink reference signal ports for an antenna panel of the at least two antenna panels, and wherein one of the first plurality of reference signal resource lists is active at a time.

In some examples, each of the second plurality of reference signal resource lists includes a different maximum number of uplink reference signal ports for an antenna panel of the at least two antenna panels, and wherein one of the second plurality of reference signal resource lists is active at a time.

In some examples, the first apparatus is further configured to transmit a message for updating an uplink reference signal resource configuration associated with the first apparatus and the second apparatus, wherein the message includes an updated uplink reference signal resource configuration that applies to the first apparatus and the second apparatus based on an active reference signal resource configuration associated with the first apparatus and the second apparatus.

In some examples, the updated uplink reference signal resource configuration includes at least one of a capability value set identifier (ID), a sounding reference signal (SRS) set identifier (ID), or an SRS resource list identifier (ID).

In some examples, the first apparatus is further configured to transmit a message for updating at least a first uplink reference signal resource configuration associated with the first apparatus and a second uplink reference signal resource configuration associated with the second apparatus, wherein the message includes a first updated uplink reference signal resource configuration that applies to the first apparatus based on a first active uplink reference signal resource configuration associated with the first apparatus and a second updated uplink reference signal resource configuration that applies to the second apparatus based on a second active uplink reference signal resource configuration associated with the second apparatus.

In some examples, the first updated uplink reference signal resource configuration includes at least one of a first capability value set identifier (ID), a first sounding reference signal (SRS) set identifier (ID), or a first SRS resource list identifier (ID), and wherein the second updated uplink reference signal resource configuration includes at least one of a second capability value set identifier (ID), a second sounding reference signal (SRS) set identifier (ID), or a second SRS resource list identifier (ID).

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIGs. 2A, 2B, 2C, and 2D are diagrams illustrating examples of a first 5G/NR frame, DL channels within a 5G/NR subframe, a second 5G/NR frame, and UL channels within a 5G/NR subframe, respectively.
FIG. 3 is a diagram illustrating an example of a transmission reception point (TRP) and user equipment (UE) in an access network.
FIG. 4 illustrates a wireless communication network including a UE, a first TRP and a second TRP.
FIGS. 5A, 5B and 5C illustrate an example signal flow diagram.
FIG. 6 includes a flowchart of a method of wireless communication.
FIGS. 7A and 7B include a flowchart of a method of wireless communication.
FIG. 8 is a conceptual data flow diagram illustrating the data flow between different means/components in an example apparatus.
FIG. 9 is a diagram illustrating an example of a hardware implementation for an apparatus employing a processing system.
FIG. 10 includes a flowchart of a method of wireless communication.
FIGS. 11A and 11B include a flowchart of a method of wireless communication.
FIG. 12 is a conceptual data flow diagram illustrating the data flow between different means/components in an example apparatus.
FIG. 13 is a diagram illustrating an example of a hardware implementation for an apparatus employing a processing system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

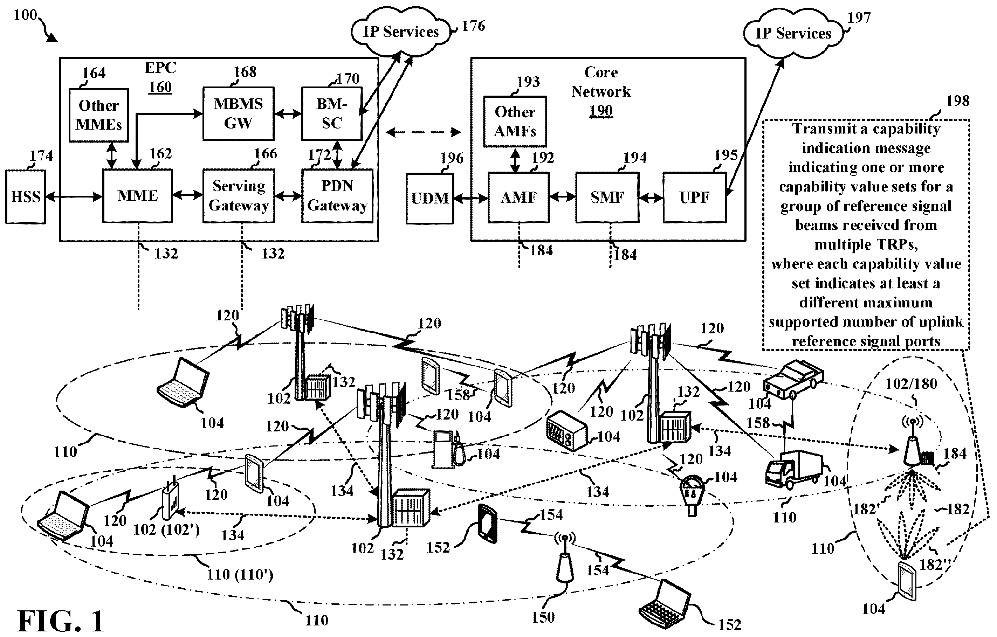

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN)) may interface with the EPC 160 through backhaul links 132 (e.g., S1 interface). The base stations 102 configured for 5G NR (collectively referred to as Next Generation RAN (NG-RAN)) may interface with core network 190 through backhaul links 184. In addition to other functions, the base stations 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over backhaul links 134 (e.g., X2 interface). The backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102 / UEs 104 may use spectrum up to YMHz (e.g., 5, 10, 15, 20, 100, 400, etc. MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

A base station 102, whether a small cell 102' or a large cell (e.g., macro base station), may include an eNB, gNodeB (gNB), or another type of base station. Some base stations, such as gNB 180 may operate in a traditional sub 6 GHz spectrum, in millimeter wave (mmW) frequencies, and/or near mmW frequencies in communication with the UE 104. When the gNB 180 operates in mmW or near mmW frequencies, the gNB 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW / near mmW radio frequency band (e.g., 3 GHz - 300 GHz) has extremely high path loss and a short range. The mmW base station 180 may utilize beamforming 182 with the UE 104 to compensate for the extremely high path loss and short range.

The base station 180 may transmit a beamformed signal to the UE 104 in one or more transmit directions 182'. The UE 104 may receive the beamformed signal from the base station 180 in one or more receive directions 182". The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include a Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a PS Streaming Service, and/or other IP services.

The base station may also be referred to as a gNB, Node B, evolved Node B (eNB), an access point, a base transceiver station, a radio base station, a radio transceiver, a transceiver function, a basic service set (BSS), an extended service set (ESS), a transmission reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Referring again to FIG. 1, in certain aspects, the UE 104 may be configured to transmit a message indicating one or more capability value sets for a group of reference signal beams received from a plurality of base stations, where each capability value set indicates at least a different maximum supported number of uplink reference signal ports (198). Although the following description may be focused on 5G NR, the concepts described herein may be applicable to other similar areas, such as LTE, LTE-A, CDMA, GSM, and other wireless technologies.

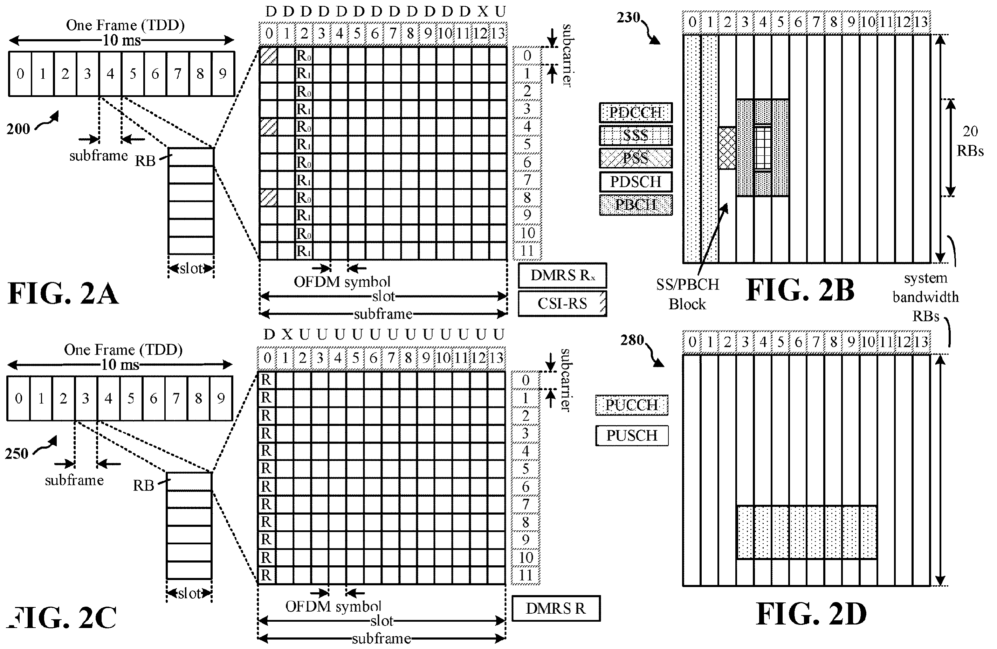

FIG. 2A is a diagram 200 illustrating an example of a first subframe within a 5G/NR frame structure. FIG. 2B is a diagram 230 illustrating an example of DL channels within a 5G/NR subframe. FIG. 2C is a diagram 250 illustrating an example of a second subframe within a 5G/NR frame structure. FIG. 2D is a diagram 280 illustrating an example of UL channels within a 5G/NR subframe. The 5G/NR frame structure may be FDD in which for a particular set of subcarriers (carrier system bandwidth), subframes within the set of subcarriers are dedicated for either DL or UL, or may be TDD in which for a particular set of subcarriers (carrier system bandwidth), subframes within the set of subcarriers are dedicated for both DL and UL. In the examples provided by FIGs. 2A, 2C, the 5G/NR frame structure is assumed to be TDD, with subframe 4 being configured with slot format 28 (with mostly DL), where D is DL, U is UL, and X is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description *infra* applies also to a 5G/NR frame structure that is TDD.

Other wireless communication technologies may have a different frame structure and/or different channels. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) OFDM (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 5 allow for 1, 2, 4, 8, 16, and 32 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2^{µ} slots/subframe. The subcarrier spacing and symbol length/duration are a function of the numerology. The subcarrier spacing may be equal to 2*^{µ}* * 15 *kKz,* where *µ* is the numerology 0 to 5. As such, the numerology µ=0 has a subcarrier spacing of 15 kHz and the numerology µ=5 has a subcarrier spacing of 480 kHz. The symbol length/duration is inversely related to the subcarrier spacing. FIGs. 2A-2D provide an example of slot configuration 0 with 14 symbols per slot and numerology µ=0 with 1 slot per subframe. The subcarrier spacing is 15 kHz and symbol duration is approximately 66.7 *µ*s.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as Rₓ for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more control channel elements (CCEs), each CCE including nine RE groups (REGs), each REG including four consecutive REs in an OFDM symbol. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (abbreviated as SSB). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. Although not shown, the UE may transmit sounding reference signals (SRS). The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and HARQ ACK/NACK feedback. The PUSCH carries data, and may additionally be used to carry a buffer status report (BSR), a power headroom report (PHR), and/or UCI.

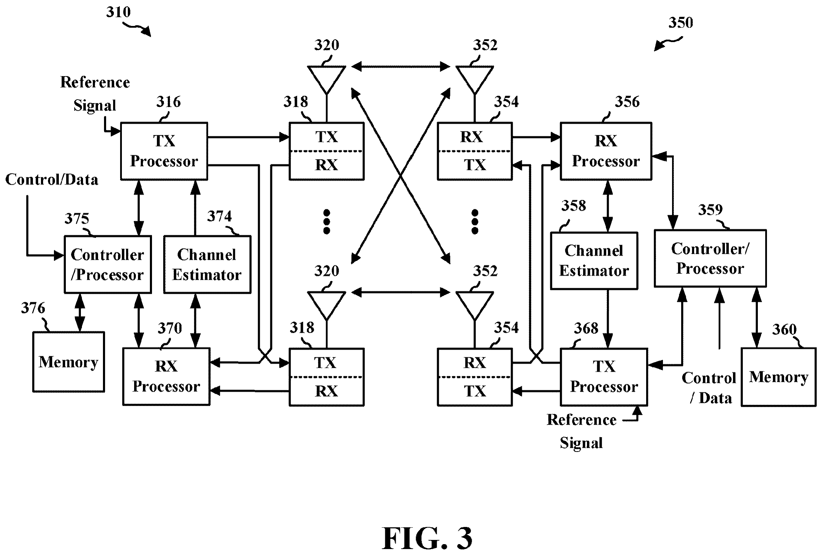

FIG. 3 is a block diagram of a base station 310 in communication with a UE 350 in an access network. In some implementations, the base station 310 may serve as a transmission reception point (TRP). In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal and/or channel condition feedback transmitted by the UE 350. Each spatial stream may then be provided to a different antenna 320 via a separate transmitter 318TX. Each transmitter 318TX may modulate an RF carrier with a respective spatial stream for transmission.

At the UE 350, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 350. If multiple spatial streams are destined for the UE 350, they may be combined by the RX processor 356 into a single OFDM symbol stream. The RX processor 356 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 310. These soft decisions may be based on channel estimates computed by the channel estimator 358. The soft decisions are then decoded and deinterleaved to recover the data and control signals that were originally transmitted by the base station 310 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK and/or NACK protocol to support HARQ operations.

Similar to the functionality described in connection with the DL transmission by the base station 310, the controller/processor 359 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 310 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 310 in a manner similar to that described in connection with the receiver function at the UE 350. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 350. IP packets from the controller/processor 375 may be provided to the EPC 160. The controller/processor 375 is also responsible for error detection using an ACK and/or NACK protocol to support HARQ operations.

At least one of the TX processor 368, the RX processor 356, and the controller/processor 359 may be configured to perform aspects in connection with 198 of FIG. 1.

A UE may initiate an antenna panel activation and selection operation, may down select an antenna selection, and/or may modify an antenna selection using different schemes. In a first example scheme, a certain antenna panel of the UE may correspond to a reported CSI-RS and/or an SSB resource index in a beam reporting instance. In some examples, the UE may indicate the correspondence between a certain antenna panel and a reported CSI-RS and/or SSB resource index to a base station. In some examples, the UE may determine the correspondence between a certain antenna panel and a CSI-RS and/or SSB resource index.

In the first example scheme, the UE may support reporting of a maximum number of SRS ports and a coherence type for each antenna panel as a UE capability. The UE may further support multiple codebook-based SRS resource sets with different maximum number of SRS ports. The UE may receive an SRS resource indicator (SRI) based on SRS resources corresponding to one SRS resource set. The SRS resource set of a number of SRS ports may be aligned with the UE capability for the antenna panel.

In a second example scheme, the UE may support reporting of a list of supported UL ranks (number of UL transmission spatial layers), a list of supported number of SRS antenna ports (also referred to as an SRS port), and/or a list of coherence types indicating a subset of ports. The network (e.g., a base station) may configure an association between an index and a rank, a number of SRS antenna ports, and/or a coherence type. In some examples, the coherence type may be one of full coherence, partial coherence, or non-coherence.

The UE may include (e.g., in a beam reporting instance) at least one of the index, the maximum UL rank, the maximum number of SRS antenna ports, or coherence type corresponding to a reported SSBRI/CRI in a beam reporting instance. The UE may support multiple codebook-based SRS resource sets with different numbers of SRS antenna ports. The UE may receive an SRS resource indicator (SRI) based on the SRS resources corresponding to one SRS resource set. The SRS resource set may be aligned with the information (e.g., the information reported by the UE) corresponding to the index.

An uplink reference signal resource (e.g., an SRS resource) may be configured with a number of antenna ports (e.g., 1 SRS port, 2 SRS ports, or 4 SRS ports). An antenna port (e.g., an SRS port) may be considered an identifier for a channel. Therefore, the antenna ports (e.g., SRS ports) described herein refer to a logical concept and may not necessarily indicate a mapping to specific physical antenna ports.

In some examples, to facilitate UE-initiated panel activation and selection, the UE may support reporting of a list of UE capability value sets. Each UE capability value set may include at least the maximum supported number of SRS ports. In some examples, no two UE capability value sets may include identical entries. In some examples, a UE capability value set may include capabilities other than, or in addition to, the maximum supported number of SRS ports. In some examples, a UE capability value set can be common across all bandwidth parts (BWPs) and/or component carriers (CCs) in the same band or band combination.

The correspondence between each reported CSI-RS and/or SSB resource index and one of the UE capability value sets in the list of UE capability value sets reported by the UE may be determined by the UE and may be indicated to the network (e.g., a base station) in a beam reporting instance. For example, the UE may report an index corresponding to a UE capability value set along with a SSBRI/CRI and L1-RSRP/SINR (e.g., up to four pairs, with 7-bit absolute and 4-bit differential) in a beam reporting UCI. In some examples, the UE may assume that the correspondence report is activated from the time instance of the reporting.

In some examples, the UE may support an SRS resource set with usage "codebook" with different numbers of SRS ports for different SRS resources. In some examples, the network (e.g., a base station) may implement an acknowledgement (ACK) mechanism to acknowledge the correspondence report from the UE. In some examples, the UE and/or the network (e.g., a base station) may apply one or more different time-domain behaviors.

A UE may transmit a beam report corresponding to different uplink antenna panels or UE capabilities for fast uplink antenna panel selection for a single TRP (e.g., a single base station). For example, a UE may indicate a capability specific to an antenna panel of the UE per beam index with respect to a single TRP. In some scenarios, a UE may be configured to communicate with multiple TRPs (e.g., multiple base stations). The aspects described herein may allow a UE to indicate uplink reference signal resource sets for supporting fast uplink antenna panel selection in mTRP communications.

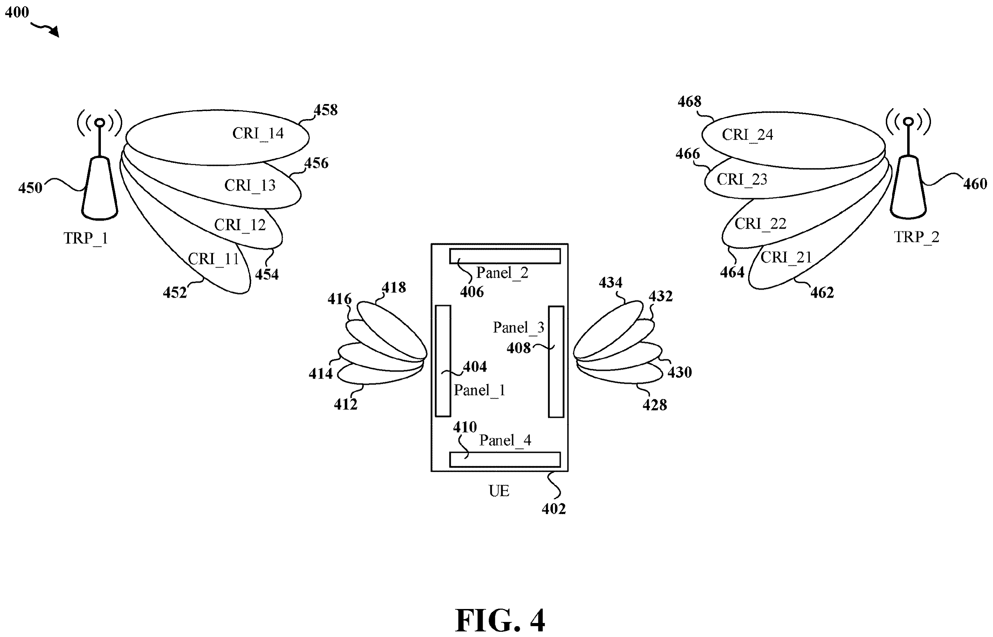

FIG. 4 illustrates a wireless communication network 400 including a UE 402, a first TRP (TRP_1) 450, and a second TRP (TRP_2) 460. While the aspects described with reference to FIG. 4 includes two TRPs, it should be understood that the described aspects may be applied to deployments including more than two TRPs (e.g., more than two TRPs).

In some aspects, each of the first and second TRPs 450, 460 may be implemented as a remote radio head (RRH). In one example, the two RRHs (e.g., the first and second TRPs 450, 460) may belong to one base station. In other examples, each of the two RRHs (e.g., the first and second TRPs 450, 460) may belong to a different base station.

The UE 402 may include multiple antenna panels. In the example of FIG. 4, the UE includes four antenna panels, such as a first antenna panel (panel_1) 404, a second antenna panel (panel_2) 406, a third antenna panel (panel_3) 408, and a fourth antenna panel (panel_4) 410. It should be understood that the UE 402 may include a different number of antenna panels in other examples.

The UE 402 may use two or more antenna panels to communicate with two or more TRPs (e.g., two or more TRPs). This is also referred to as multi-TRP or mTRP communications. In some aspects of the disclosure, a pair of antenna panels of the UE 402 may be symmetric antenna panels or asymmetric antenna panels with respect to a pair of TRPs. A pair of antenna panels of the UE 402 may be considered symmetric if each of those antenna panels support the same maximum number of uplink reference signal ports (e.g., SRS ports) with respect to a different TRP. A pair of antenna panels of the UE 402 may be considered asymmetric if each of those antenna panels support a different maximum number of uplink reference signal ports (e.g., SRS ports) with respect to a different TRP.

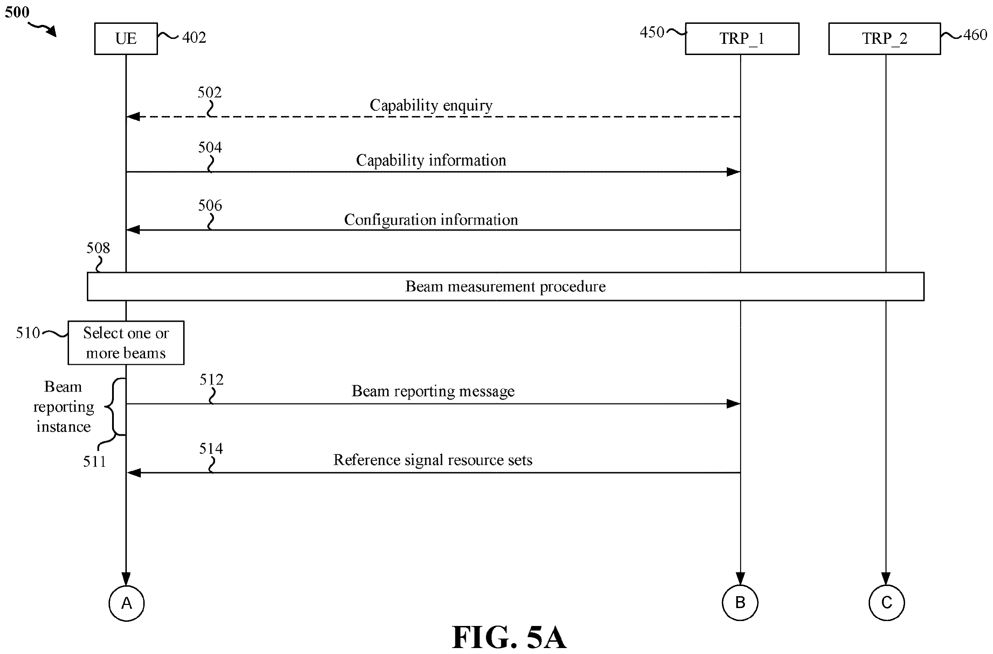

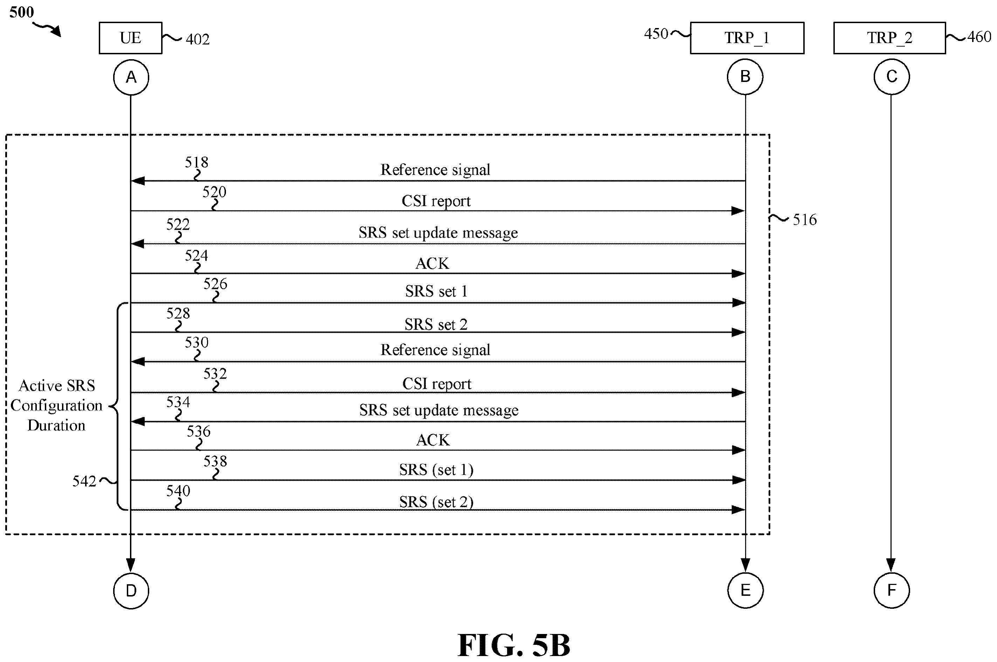

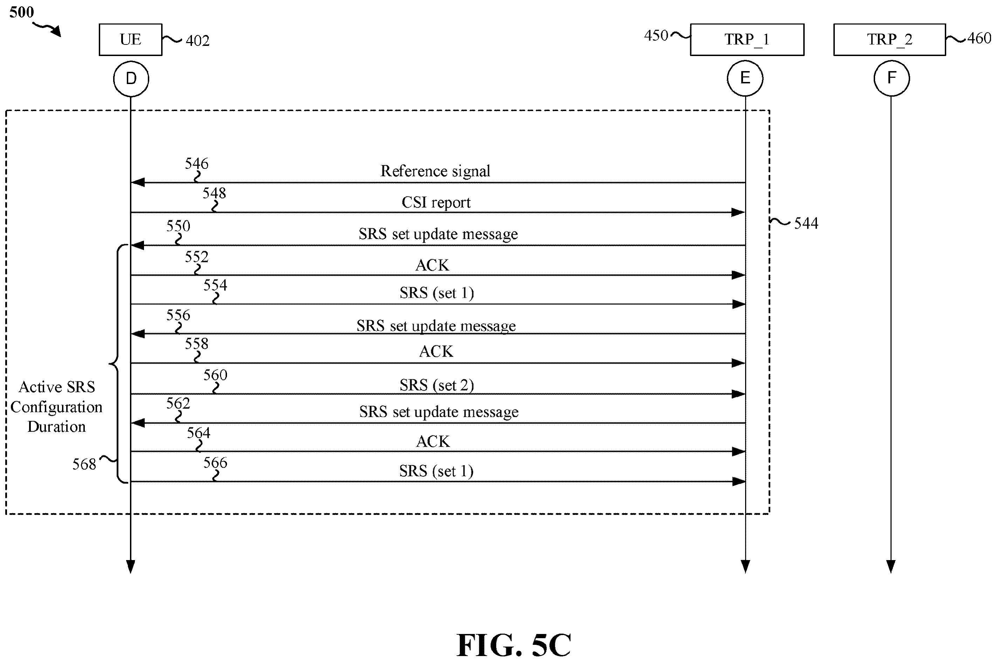

In the aspects described herein, the UE 402 may support reporting of UE capabilities for uplink reference signal transmissions (e.g., SRS transmissions) based on symmetric and asymmetric antenna panels to enable fast uplink antenna panel selection. Communications between the UE 402 and the first and second TRPs 450, 460 will now be described with reference to FIGS. 5A, 5B and 5C.

FIGS. 5A, 5B and 5C illustrate an example signal flow diagram 500 in accordance with various aspects of the disclosure. With reference to FIG. 5A, the first TRP 450 may optionally transmit a capability inquiry message 502. In some examples, the capability inquiry message 502 may include a request for one or more of the capabilities of the UE 402.

The UE 402 may transmit a capability information message 504 to the first TRP 450. In some examples, the UE 402 may transmit the capability information message 504 in response to the capability inquiry message 502. In some aspects of the disclosure, the capability information message 504 may include a list of UE capability value sets associated with at least two antenna panels of the UE 402.

In some examples, each capability value set in the list of UE capability value sets may indicate at least a different maximum supported number of uplink reference signal ports for an antenna panel of the at least two antenna panels of the UE 402. In some examples, the uplink reference signal ports may be SRS ports in a SRS resource set configured for codebook based MIMO transmission. In some examples, each capability value set may further indicate a maximum uplink rank and/or a coherence type associated with a group of reference signal beams received from multiple TRPs (e.g., the first and second TRPs 450, 460). For example, each reference signal beam may be associated with a channel state information (CSI) resource index or an SSB resource index.

In one example, a capability value set of the UE 402 may include at least a maximum number of SRS ports an antenna panel of the UE 402 may support with respect to one or more TRPs, such as the first TRP 450 and/or the second TRP 460. An example list of UE capability value sets of the UE 402 is shown in Table 1.

**Table 1**

| UE Capability Value Set ID | Maximum supported number of uplink reference signal ports and resources |
|---|---|
| UE Capability Value Set_1 | 4 ports |
| UE Capability Value Set_2 | 2 ports |
| UE Capability Value Set_3 | 1 port |

Table 1 includes three different UE capability value set IDs (e.g., UE Capability Value Set_1, UE Capability Value Set_2, and UE Capability Value Set_3). Each of the UE capability value set IDs may be associated with at least a maximum supported number of uplink reference signal ports. In some examples, the uplink reference signal ports may be SRS ports.

For example, as indicated in Table 1, the UE Capability Value Set_1 may be associated with a maximum of 4 ports, the UE Capability Value Set_2 may be associated with a maximum of 2 ports, and the UE Capability Value Set_3 may be associated with a maximum of 1 port. In other examples, each UE capability value set ID may be further associated with a maximum supported number of uplink resources (e.g., time-frequency resources, beams, etc.) for an uplink reference signal. In these examples, each UE capability value set ID may be associated with a maximum supported number of uplink resources for an uplink reference signal and a maximum supported number of uplink reference signal ports per uplink resource.

In some aspects of the disclosure, the capability information message 504 may indicate support for symmetric antenna panels or asymmetric antenna panels for a beam reporting operation. In these aspects, the UE 402 may determine whether a pair of antenna panels of the UE 402 are symmetric antenna panels or asymmetric antenna panels with respect to a pair of TRPs.

For example, if two antenna panels of the UE 402 (e.g., the first antenna panel 404 and the third antenna panel 408) support the same maximum number of uplink reference signal ports with respect to different TRPs (e.g., the first TRP 450 and the second TRP 460), the two antenna panels of the UE 402 may be considered symmetric antenna panels. For example, if two antenna panels of the UE 402 (e.g., first antenna panel 404 and the third antenna panel 408) support different maximum numbers of uplink reference signal ports with respect to different TRPs (e.g., the first TRP 450 and the second TRP 460), the two antenna panels of the UE 402 may be considered asymmetric antenna panels.

With reference to FIG. 5A, the first TRP 450 may transmit a configuration information message 506 to the UE 402. The configuration information message 506 may include a beam reporting configuration for a beam reporting instance of the UE 402 based on the capability information message 504. For example, if the capability information message 504 indicates that the UE 402 supports symmetric antenna panels and/or asymmetric antenna panels for a beam reporting operation, the beam reporting configuration may configure the UE 402 to report one capability value set for two or more symmetric antenna panels or to report different capability value sets for two or more asymmetric antenna panels.

At 508, the UE 402 may perform a beam measurement procedure with the first and second TRPs 450, 460. For example, with reference to FIG. 4, the first TRP 450 may perform a beam sweep operation by transmitting a number of transmit beams in different directions, such as the transmit beams 452, 454, 456, and 458. The UE 402 may measure the transmit beams 452, 454, 456, and 458 at the first antenna panel 404 using one or more receive beams, such as the receive beams 412, 414, 416, 418. The second TRP 460 may perform a beam sweep operation by transmitting a number of transmit beams in different directions, such as the transmit beams 462, 464, 466, and 468. The UE 402 may measure the transmit beams 462, 464, 466, and 468 at the third antenna panel 408 using one or more receive beams, such as the receive beams 428, 430, 432, and 434. Each receive beam may be associated with a CSI resource or an SSB resource.

At 510, the UE 402 may select one or more beams based on the beam measurements. In some examples, the UE 402 may select one or more groups of beams (e.g., each group including at least two beams) from the first and second TRPs 450, 460. In one example, the UE 402 may select a first group of beams including the beams 452, 462, a second group of beams including the beams 454, 464, a third group of beams including the beams 456, 466, and a fourth group of beams including the beams 458, 468. For example, the first group of beams (e.g., the beams 452, 462) may have the highest measured beam strengths and the fourth group of beams (e.g., the beams 458, 468) may have the lowest measured beam strengths.

During a beam reporting instance 511 in FIG. 5A, the UE 402 may transmit a beam reporting message 512. The beam reporting message 512 may indicate one or more groups of beams and one or more UE capability value sets for each group of beams. In some examples, the UE 402 may indicate a group of beams using a beam index associated with each beam, such as a CSI-RS Resource Indicator (CRI) value and/or an SS/PBCH Resource Block Indicator (SSBRI) value associated with each beam. Table 2 shows an example of a beam reporting message.

**Table 2**

| Beam Index | UE Capability Value Set ID |
|---|---|
| (CRI_11, CRI_21) | (UE Capability Value Set_1, UE Capability Value Set_2) |
| (CRI_12, CRI_22) | (UE Capability Value Set_1, UE Capability Value Set_3) |
| (CRI_13, CRI_23) | (UE Capability Value Set_2) |
| (CRI_14, CRI_24) | (UE Capability Value Set_1) |

As shown in Table 2, and with reference to FIG. 4, the UE 402 may indicate the first group of beams by indicating the CRI values CRI_11, CRI_21 of the beams 452, 462 in the first group of beams. In the example of Table 2, the first antenna panel 404 may support a maximum of 4 SRS ports for the transmit beam 452 associated with CRI_11 and the third antenna panel 408 may support a maximum of 2 SRS ports for the transmit beam 462 associated with CRI_21. Since the first and third antenna panels 404, 408 support a different maximum number of SRS ports for the first group of beams, the first and third antenna panels 404, 408 may be considered asymmetric antenna panels for the first and second TRPs 450, 460 with respect to the first group of beams. In this scenario, the UE 402 may indicate multiple UE capability value set IDs for the first group of beams (e.g., CRI_11, CRI_21), such as the UE Capability Value Set_1 associated with 4 ports for the first antenna panel 404 and the UE Capability Value Set_2 associated with 2 ports for the third antenna panel 408.

As further shown in Table 2, and with reference to FIG. 4, the UE 402 may indicate the second group of beams by indicating the CRI values CRI_12, CRI_22 of the beams 454, 464 in the second group of beams. In the example of Table 2, the first antenna panel 404 may support a maximum of 4 SRS ports for the transmit beam 454 associated with CRI_12 and the third antenna panel 408 may support a maximum of one SRS port for the transmit beam 464 associated with CRI_22. Since the first and third antenna panels 404, 408 support a different maximum number of SRS ports for the second group of beams, the first and third antenna panels 404, 408 may be considered asymmetric antenna panels for the first and second TRPs 450, 460 with respect to the second group of beams. In this scenario, the UE 402 may indicate multiple UE capability value set IDs for the second group of beams (e.g., CRI_12, CRI_22), such as the UE Capability Value Set_1 associated with 4 ports for the first antenna panel 404 and the UE Capability Value Set_3 associated with 1 port for the third antenna panel 408.

As further shown in Table 2, and with reference to FIG. 4, the UE 402 may indicate the third group of beams by indicating the CRI values CRI_13, CRI_23 of the beams 456, 466 in the third group of beams. In the example of Table 2, the first antenna panel 404 may support a maximum of one SRS port for the transmit beam 456 associated with CRI_13 and the third antenna panel 408 may support a maximum of one SRS port for the transmit beam 466 associated with CRI_23. Since the first and third antenna panels 404, 408 support the same maximum number of SRS ports for the third group of beams, the first and third antenna panels 404, 408 may be considered symmetric antenna panels for the first and second TRPs 450, 460 with respect to the third group of beams. In this scenario, the UE 402 may indicate a single UE capability value set ID, such as UE Capability Value Set_1 associated with 1 port, which may apply to both the first and third antenna panels 404, 408.

As further shown in Table 2, and with reference to FIG. 4, the UE 402 may indicate the fourth group of beams by indicating the CRI values CRI_14, CRI_24 of the beams 458, 468 in the fourth group of beams. In the example of Table 2, the first antenna panel 404 may support a maximum of one SRS port for the transmit beam 458 associated with CRI_14 and the third antenna panel 408 may support a maximum of one SRS port for the transmit beam 468 associated with CRI_24. Since the first and third antenna panels 404, 408 support the same maximum number of SRS ports for the fourth group of beams, the first and third antenna panels 404, 408 may be considered symmetric antenna panels for the first and second TRPs 450, 460 with respect to the fourth group of beams. In this scenario, the UE 402 may indicate a single UE capability value set ID, such as UE Capability Value Set_1 associated with 1 port, which may apply to both the first and third antenna panels 404, 408.

The first TRP 450 may transmit a message 514 including reference signal resource sets for the first and second TRPs 450, 460 in response to the beam reporting message 512. In some aspects of the disclosure, the message 514 may include multiple reference signal resource sets for each bandwidth part of a component carrier assigned to the UE 402. In some aspects of the disclosure, the reference signal resource sets in the message 514 may include multiple reference signal resource sets (e.g., SRS sets) associated with the first TRP 450, and multiple reference signal resource sets (e.g., SRS sets) associated with the second TRP 460.

In some examples, each of the reference signal resource sets (e.g., SRS sets) associated with the first TRP 450 may accommodate different maximum numbers of uplink reference signal ports (e.g., SRS ports) and/or other resources (e.g., time-frequency resources, beams, etc.). For example, each of the reference signal resource sets associated with the first TRP 450 may configure a different maximum number of uplink reference signal ports (e.g., SRS ports) for the first antenna panel 404 of the UE 402. In some aspects, one of the reference signal resource sets associated with the first TRP 450 may be active at a time.

In some examples, each of the reference signal resource sets (e.g., SRS sets) associated with the second TRP 460 may accommodate different maximum numbers of uplink reference signal ports (e.g., SRS ports) and/or other resources (e.g., time-frequency resources, beams, etc.). For example, each of the reference signal resource sets associated with the second TRP 460 may configure a different maximum number of uplink reference signal ports (e.g., SRS ports) for the third antenna panel 408 of the UE 402. In some aspects, one of the reference signal resource sets associated with the second TRP 460 may be active at a time.

In one example, the reference signal resource sets associated with the first TRP 450 may include a first set of SRS resources for 4 SRS ports, a second set of SRS resources for 2 SRS ports, and a third set of SRS resources for 1 SRS port. Continuing with this example, the reference signal resource sets associated with the second TRP 460 may include a first set of SRS resources for 2 SRS ports and a second set of SRS resources for 1 SRS port.

In some aspects of the disclosure, the reference signal resource sets for the first and second TRPs 450, 460 in the message 514 may include a first reference signal resource set associated with the first TRP 450, and a second reference signal resource set associated with the second TRP 460. In these aspects, each of the first and second reference signal resource sets may include multiple reference signal resource lists.

For example, each reference signal resource list in the first reference signal resource set may configure a different maximum number of uplink reference signal ports for an antenna panel of the UE 402. In some examples, one of the reference signal resource lists of a reference signal resource set may be active at a time. The non-active reference signal resource lists may be suspended. Examples of reference signal resource sets including multiple reference signal resource lists are shown in Tables 3 and 4.

**Table 3**

| Reference Signal Resource List ID in SRS Set 1 | Number of Resources and Ports |
|---|---|
| SRS Resource List_11 | 4 SRS resources, 4 SRS ports per SRS resource |
| SRS Resource List_12 | 2 SRS resources, 2 SRS ports per SRS resource |

Table 3 includes an example of a first SRS set (SRS Set 1) including two SRS resource lists. For example, a first SRS resource list may be associated with a reference signal resource list identifier SRS Resource List_11 and a second SRS resource list may be associated with a reference signal resource list identifier SRS Resource List_12. The first SRS resource list (SRS Resource List_11) in SRS Set 1 may include 4 SRS resources and 4 SRS ports per SRS resource. The second SRS resource list (SRS Resource List_12) in SRS Set 1 may include 2 SRS resources and 2 SRS ports per SRS resource.

**Table 4**

| Reference Signal Resource List ID in SRS Set 2 | Number of Resources and Ports |
|---|---|
| SRS Resource List_21 | 4 SRS resources, 4 SRS ports per SRS resource |
| SRS Resource List_22 | 2 SRS resources, 2 SRS ports per SRS resource |

Table 4 includes an example of a second SRS set (SRS Set 2) including two SRS resource lists. For example, a first SRS resource list may be associated with a reference signal resource list identifier SRS Resource List_21 and a second SRS resource list may be associated with a reference signal resource list identifier SRS Resource List_22. The first SRS resource list (SRS Resource List_21) in SRS Set 2 may include 4 SRS resources and 4 SRS ports per SRS resource. The second SRS resource list (SRS Resource List_22) in SRS Set 2 may include 2 SRS resources and 2 SRS ports per SRS resource.

In some aspects of the disclosure, a TRP may transmit a configuration update message to the UE 402 to dynamically update an uplink reference signal resource configuration (e.g., one or more SRS sets configured for codebook or non-codebook MIMO) associated with multiple TRPs (e.g., mTRP) for fast antenna panel selection at the UE 402. For example, the uplink reference signal resource configuration of the UE 402 may include one or more uplink reference signal resource sets associated with the first TRP 450 and one or more uplink reference signal resource sets associated with the second TRP 460.

In some aspects of the disclosure, the UE 402 may determine an updated uplink reference signal resource configuration in the configuration update message based on an active reference signal resource configuration associated with the multiple TRPs (e.g., the first and second TRPs 450, 460). In some examples, the updated uplink reference signal resource configuration may apply to multiple TRPs (e.g., the first and second TRPs 450, 460). In some examples, the updated uplink reference signal resource configuration includes at least one of a capability value set identifier (ID), an SRS set identifier (ID), or an SRS resource list identifier (ID).

In some aspects of the disclosure, the UE 402 may receive a message for updating at least a first uplink reference signal resource configuration associated with the first TRP 450 and a second uplink reference signal resource configuration associated with the second TRP 460. The UE 402 may determine a first updated uplink reference signal resource configuration in the configuration update message based on a first active uplink reference signal resource configuration associated with the first TRP 450.

The first updated uplink reference signal resource configuration may apply to the first TRP 450. In some examples, the first updated uplink reference signal resource configuration includes at least one of a first capability value set identifier (ID), a first SRS set identifier (ID), or a first SRS resource list identifier (ID).

The UE 402 may determine a second updated uplink reference signal resource configuration in the configuration update message based on a second active uplink reference signal resource configuration associated with the second TRP 460. The second updated uplink reference signal resource configuration may apply to the second TRP 460. In some examples, the second updated uplink reference signal resource configuration includes at least one of a second capability value set identifier (ID), an SRS set identifier (ID), or a second SRS resource list identifier (ID).

In some examples, an updated uplink reference signal resource configuration may be indicated in an SRS resource indicator (SRI) field and/or a transmitted precoding matrix indicator (TPMI) field in DCI. A UE may use an SRI (e.g., indicated in an SRI field in DCI) to determine the antenna ports and uplink transmission beam to be used for an uplink transmission in an uplink channel (e.g., PUSCH). The size of the SRI field in DCI may depend on whether codebook-based or non-codebook-based precoding is used.

The UE 402 may dynamically determine an SRI field and a TPMI field in DCI for each of multiple TRPs based on the active reference signal resource configuration associated with the multiple TRPs. For example, an active SRS configuration for an antenna panel of the UE 402 with respect to a TRP may set a certain number of SRS ports and TPMI ports, which may define the size (e.g., field length, such as 2 bits, 6 bits, etc.) of an SRI field and TPMI field in DCI, and the number of codepoints in DCI. For example, as the number of SRS ports and the number of precoders are increased, more codepoints may be included in the SRI field and the TPMI field. This may result in an increase in the sizes of the SRI field and TPMI field.

For example, the UE 402 may determine a first SRI field and a first TPMI field in DCI for the first TRP 450, and a second SRI field and a second TPMI field in DCI for the second TRP 460. The UE 402 may determine the first SRI field and the first TPMI field based on the active uplink reference signal resource configuration for the first TRP 450, and may determine the second SRI field and the second TPMI field based on the active uplink reference signal resource configuration for the second TRP 460.

In some aspects of the disclosure, if two TRPs are symmetric with respect to two antenna panels of the UE 402, an updated uplink reference signal resource configuration received at the UE 402 may be common to the two TRPs. In this case, the UE 402 may apply the updated uplink reference signal resource configuration to both TRPs. In some examples, the updated uplink reference signal resource configuration may include a UE capability value set ID, an SRS set ID, and/or an SRS resource list ID. In some examples, a reduced signaling scheme (e.g., the reduced signaling scheme 516 described with reference to FIG. 5B) may be implemented to update the uplink reference signal resource configuration of the UE 402. In some examples, the reduced signaling scheme 516 may include a single indication signal or a single indication field for delivery of the updated uplink reference signal resource configuration to the UE 402.

In some aspects of the disclosure, if two TRPs are asymmetric with respect to two antenna panels of the UE 402, an updated uplink reference signal resource configuration may be received at the UE 402 for each TRP. In this case, the UE 402 may apply a first updated uplink reference signal resource configuration to the first TRP 450 and may apply a second updated uplink reference signal resource configuration to the second TRP 460. In some examples, the first and second updated uplink reference signal resource configurations may each include a UE capability value set ID, an SRS set ID, and/or an SRS resource list ID. In some examples, a separate signaling scheme (e.g., the separate signaling scheme 544 described with reference to FIG. 5C) may be implemented to update the uplink reference signal resource configuration of the UE 402. In some examples, the separate signaling scheme 544 may include separate indication signals or separate indication fields for delivery of the updated uplink reference signal resource configurations to the UE 402.

With reference to FIG. 5B, when different antenna panels of the UE 402 (e.g., the first and third antenna panels 404, 408) associated with different TRPs (e.g., the first and second TRPs 450, 460) are symmetric antenna panels, a TRP may update an uplink reference signal resource configuration of the UE 402 according to the reduced signaling scheme 516. In these scenarios, the different TRPs may be considered symmetric TRPs.

In one example, the UE 402 may be configured with a first reference signal resource set (e.g., SRS set 1 in Table 3) for the first antenna panel 404 and the first TRP 450, and a second reference signal resource set (e.g., SRS set 2 in Table 4) for the third antenna panel 408 and the second TRP 460. In this example, with reference to FIG. 5B, the first TRP 450 may transmit a reference signal 518 for channel estimation at the UE 402, such as a CSI-RS. The UE 402 may transmit a channel state information (CSI) report 520 based on the reference signal 518. In one example, the CSI report 520 may indicate a maximum supported number of SRS ports (e.g., 4 SRS ports) for a pair of symmetric antenna panels of the UE 402, such as the first and third antenna panels 404, 408.

The first TRP 450 may transmit an SRS set update message 522. For example, since the UE 402 indicated a maximum of 4 SRS ports in the CSI report 520, the SRS set update message 522 may indicate that SRS Resource List_1 should be active in an SRS set. Since the first and third antenna panels 404, 408 are symmetric antenna panels, the UE 402 may apply the SRS set update message 522 to both the first and second reference signal resource sets (e.g., SRS set 1, SRS set 2) of the first and third antenna panels 404, 408. The UE 402 may transmit an acknowledgement (ACK) message 524 to the first TRP 450 in response to the SRS set update message 522.

The UE 402 may transmit SRS set 1 526 and SRS set 2 528 with SRS Resource List_1 as the active SRS resource list. The first TRP 450 may subsequently transmit another reference signal 530, such as a CSI-RS. The UE 402 may transmit a CSI report 532 based on the reference signal 530. In one example, the CSI report 532 may indicate a maximum supported number of SRS ports (e.g., 2 SRS ports) for the pair of symmetric antenna panels of the UE 402, such as the first and third antenna panels 404, 408.

The first TRP 450 may transmit an SRS set update message 534. For example, since the UE 402 indicated a maximum of 2 SRS ports in the CSI report 532, the SRS set update message 534 may indicate that SRS Resource List_2 should be active in an SRS set. Since the first and third antenna panels 404, 408 are symmetric antenna panels, the UE 402 may apply the SRS set update message 534 to both the first and second reference signal resource sets (e.g., SRS set 1, SRS set 2) of the first and third antenna panels 404, 408. The UE 402 may transmit an acknowledgement (ACK) message 536 to the first TRP 450 in response to the SRS set update message 534. The UE 402 may transmit SRS set 1 538 and SRS set 2 540 with SRS Resource List_2 as the active SRS resource list.

In some examples, the SRS Resource List_1 may be active for the active SRS configuration duration 542. In some examples, the active SRS configuration duration 542 may be approximately 3 milliseconds (ms).

With reference to FIG. 5C, when different antenna panels of the UE 402 (e.g., the first and third antenna panels 404, 408) associated with different TRPs (e.g., the first and second TRPs 450, 460) are asymmetric antenna panels, a TRP may update an uplink reference signal resource configuration of the UE 402 according to a separate signaling scheme 544. In these scenarios, the different TRPs may be considered asymmetric TRPs.

In one example, the UE 402 may be configured with a first reference signal resource set (e.g., SRS set 1 in Table 3) for the first antenna panel 404 and the first TRP 450, and a second reference signal resource set (e.g., SRS set 2 in Table 4) for the third antenna panel 408 and the second TRP 460. In this example, with reference to FIG. 5C, the first TRP 450 may transmit a reference signal 546, such as a CSI-RS. The UE 402 may transmit a CSI report 548 based on the reference signal 546. In one example, the CSI report 548 may indicate a maximum supported number of SRS ports (e.g., 4 SRS ports) for a pair of asymmetric antenna panels of the UE 402, such as the first and third antenna panels 404, 408.

The first TRP 450 may transmit an SRS set update message 550. For example, since the UE 402 indicated a maximum of 4 SRS ports in the CSI report 548, the SRS set update message 550 may indicate that SRS Resource List_1 should be active in SRS set 1. The UE 402 may transmit an acknowledgement (ACK) message 552 to the first TRP 450 in response to the SRS set update message 550. The UE 402 may transmit SRS set 1 554 with SRS Resource List_1 as the active SRS resource list.

The first TRP 450 may transmit an SRS set update message 556. For example, since the UE 402 indicated a maximum of 4 SRS ports in the CSI report 548, the SRS set update message 556 may indicate that SRS Resource List_1 should be active in SRS set 2. The UE 402 may transmit an acknowledgement (ACK) message 558 to the first TRP 450 in response to the SRS set update message 556. The UE 402 may transmit SRS set 2 560 with SRS Resource List_1 as the active SRS resource list.

The first TRP 450 may transmit an SRS set update message 562. For example, the SRS set update message 556 may indicate that SRS Resource List_2 should be active in SRS set 1. The UE 402 may transmit an acknowledgement (ACK) message 564 to the first TRP 450 in response to the SRS set update message 562. The UE 402 may transmit SRS set 1 566 with SRS Resource List_2 as the active SRS resource list.

In some examples, the SRS Resource List_1 may be active for the active SRS configuration duration 568. In some examples, the active SRS configuration duration 568 may be approximately 6 milliseconds (ms).

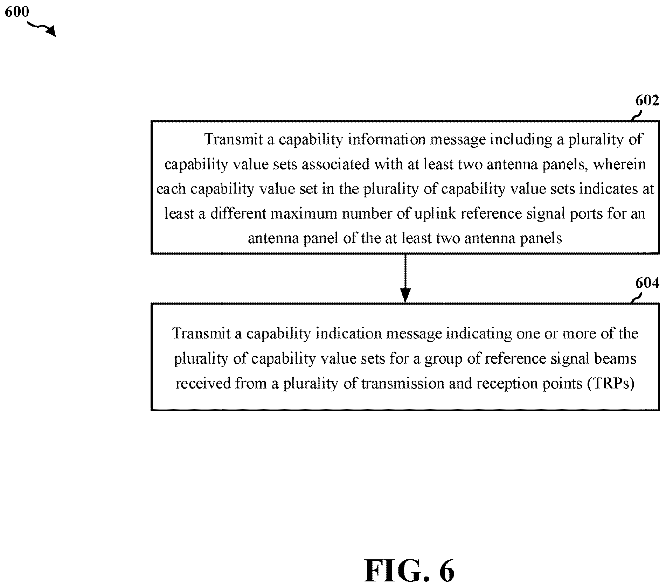

FIG. 6 includes a flowchart 600 of a method of wireless communication. The method may be performed by a UE (e.g., the UE 402; the apparatus 802/802'; the processing system 914, which may include the memory 360 and which may be the entire UE 402 or a component of the UE 402, such as the TX processor 368, the RX processor 356, and/or the controller/processor 359).

At 602, the UE transmits a capability information message including a plurality of capability value sets associated with at least two antenna panels, wherein each capability value set in the plurality of capability value sets indicates at least a different maximum number of uplink reference signal ports for an antenna panel of the at least two antenna panels.

For example, with reference to FIG. 5A, the UE 402 may transmit the capability information message 504. In one example, the plurality of capability value sets may include three different UE capability value set IDs (e.g., UE Capability Value Set_1, UE Capability Value Set_2, and UE Capability Value Set_3). Each of the UE capability value set IDs may be associated with at least a maximum supported number of uplink reference signal ports as described with reference to Table 1.

In some examples, the one or more of the plurality of capability value sets includes a capability value set that applies to two or more TRPs of the plurality of TRPs. In some examples, the one or more of the plurality of capability value sets includes a first capability value set that applies to a first TRP of the plurality of TRPs, and a second capability value set that applies to a second TRP of the plurality of TRPs. For example, with reference to FIG. 5, if the capability information message 504 indicates that the UE 402 supports symmetric antenna panels, the UE 402 may report one capability value set for two or more symmetric antenna panels. If the capability information message 504 indicates that the UE 402 supports asymmetric antenna panels, the UE 402 may report different capability value sets for two or more asymmetric antenna panels.

Finally, at 604, the UE transmits a capability indication message indicating one or more of the plurality of capability value sets for a group of reference signal beams received from a plurality of transmission and reception points (TRPs). In some aspects, the capability indication message includes one or more capability value set identifiers (IDs), and wherein each capability value set in the plurality of capability value sets further indicates at least one of a maximum uplink rank or a coherence type associated with the group of reference signal beams received from the plurality of TRPs.

In some examples, the capability indication message may be the beam reporting message 512 which indicates one or more UE capability value sets for each group of beams. In one example, if the first and third antenna panels 404, 408 are symmetric with respect to the first and second TRPs 450, 460, the UE 402 may indicate a single UE capability value set ID for a group of beams, such as UE Capability Value Set_1 associated with 1 port, which may apply to both the first and third antenna panels 404, 408. In one example, if the first and third antenna panels 404, 408 are asymmetric with respect to the first and second TRPs 450, 460, the UE 402 may indicate multiple UE capability value set IDs for a group of beams, such as the UE Capability Value Set_1 associated with 4 ports for the first antenna panel 404 and the UE Capability Value Set_3 associated with 1 port for the third antenna panel 408.

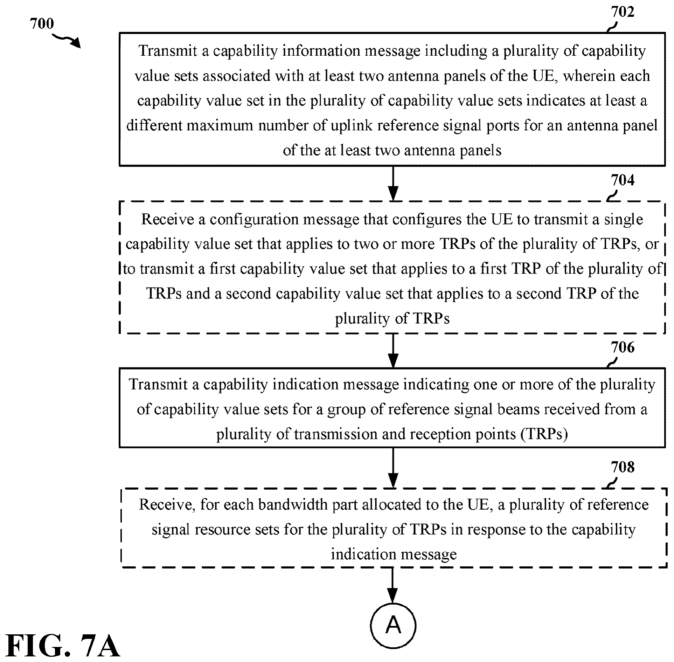

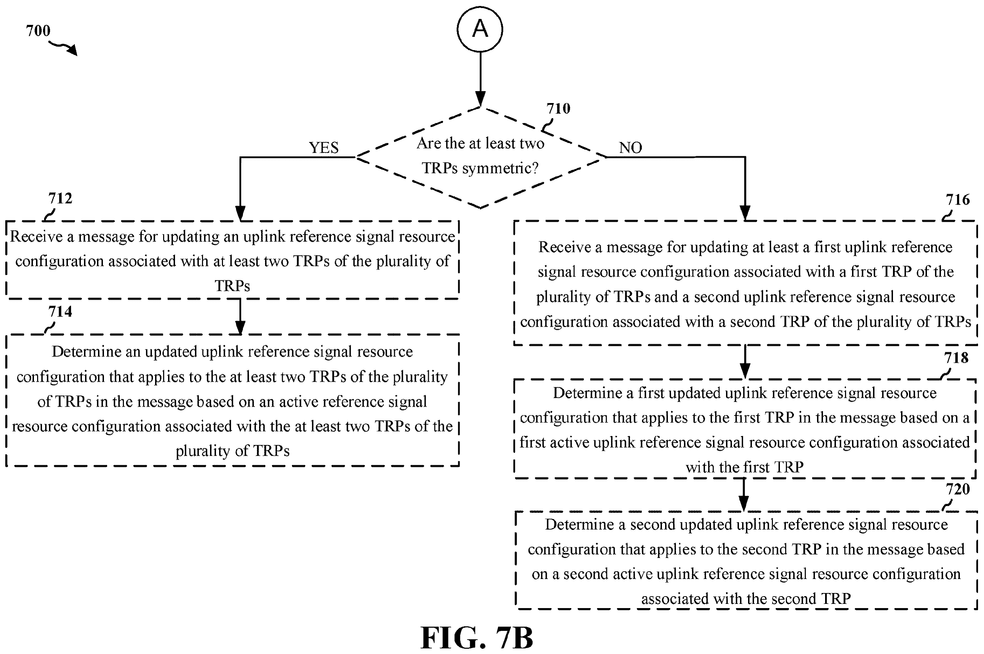

FIGS. 7A and 7B include a flowchart 700 of a method of wireless communication. The method may be performed by a UE (e.g., the UE 402; the apparatus 802/802'; the processing system 914, which may include the memory 360 and which may be the entire UE 402 or a component of the UE 402, such as the TX processor 368, the RX processor 356, and/or the controller/processor 359). In FIGS. 7A and 7B, operations indicated with dashed lines represent optional operations.

With reference to FIG. 7A, at 702, the UE transmits a capability information message including a plurality of capability value sets associated with at least two antenna panels of the UE, wherein each capability value set in the plurality of capability value sets indicates at least a different maximum number of uplink reference signal ports for an antenna panel of the at least two antenna panels. In some examples, the capability information message indicates support for symmetric antenna panels or asymmetric antenna panels for a beam reporting operation.

For example, with reference to FIG. 5A, the UE 402 may transmit the capability information message 504. In one example, the plurality of capability value sets may include three different UE capability value set IDs (e.g., UE Capability Value Set_1, UE Capability Value Set_2, and UE Capability Value Set_3). Each of the UE capability value set IDs may be associated with at least a maximum supported number of uplink reference signal ports as described with reference to Table 1.

In some examples, the one or more of the plurality of capability value sets includes a capability value set that applies to two or more TRPs of the plurality of TRPs. In some examples, the one or more of the plurality of capability value sets includes a first capability value set that applies to a first TRP of the plurality of TRPs, and a second capability value set that applies to a second TRP of the plurality of TRPs. For example, with reference to FIG. 5A, if the capability information message 504 indicates that the UE 402 supports symmetric antenna panels, the UE 402 may report one capability value set for two or more symmetric antenna panels. If the capability information message 504 indicates that the UE 402 supports asymmetric antenna panels, the UE 402 may report different capability value sets for two or more asymmetric antenna panels.

At 704, the UE receives a configuration message (e.g., configuration information message 506 in FIG. 5A) that configures the UE to transmit a single capability value set that applies to two or more TRPs of the plurality of TRPs, or to transmit a first capability value set that applies to a first TRP of the plurality of TRPs and a second capability value set that applies to a second TRP of the plurality of TRPs.

For example, with reference to FIG. 5A, the first TRP 450 may transmit a configuration information message 506 to the UE 402. The configuration information message 506 may include a beam reporting configuration for a beam reporting instance of the UE 402 based on the capability information message 504. For example, if the capability information message 504 indicates that the UE 402 supports symmetric antenna panels and asymmetric antenna panels for a beam reporting operation, the beam reporting configuration may configure the UE 402 to report one capability value set for two or more symmetric antenna panels or to report different capability value sets for two or more asymmetric antenna panels.

At 706, the UE transmits a capability indication message indicating one or more of the plurality of capability value sets for a group of reference signal beams received from a plurality of TRPs. In some examples, the capability indication message includes one or more capability value set identifiers (IDs), wherein each capability value set in the plurality of capability value sets further indicates at least one of a maximum uplink rank or a coherence type associated with the group of reference signal beams received from the plurality of TRPs.

In some examples, the capability indication message may be the beam reporting message 512 which indicates one or more UE capability value sets for each group of beams. In one example, if the first and third antenna panels 404, 408 are symmetric with respect to the first and second TRPs 450, 460, the UE 402 may indicate a single UE capability value set ID for a group of beams, such as UE Capability Value Set_1 associated with 1 port, which may apply to both the first and third antenna panels 404, 408. In one example, if the first and third antenna panels 404, 408 are asymmetric with respect to the first and second TRPs 450, 460, the UE 402 may indicate multiple UE capability value set IDs for a group of beams, such as the UE Capability Value Set_1 associated with 4 ports for the first antenna panel 404 and the UE Capability Value Set_3 associated with 1 port for the third antenna panel 408.

At 708, the UE receives, for each bandwidth part allocated to the UE, a plurality of reference signal resource sets for the plurality of TRPs in response to the capability indication message. For example, with reference to FIG. 5A, the first TRP 450 may transmit a message 514 including reference signal resource sets for the first and second TRPs 450, 460 in response to the beam reporting message 512 (e.g., the capability indication message).

In some examples, the plurality of reference signal resource sets includes a first plurality of reference signal resource sets (e.g., SRS sets) associated with a first TRP of the plurality of TRPs, and a second plurality of reference signal resource sets (e.g., SRS sets) associated with a second TRP of the plurality of TRPs.

In some examples, each of the first plurality of reference signal resource sets includes a different maximum number of uplink reference signal ports for an antenna panel of the at least two antenna panels, and wherein one of the first plurality of reference signal resource sets is active at a time. Each of the second plurality of reference signal resource sets includes a different maximum number of uplink reference signal ports for an antenna panel of the at least two antenna panels, and wherein one of the second plurality of reference signal resource sets is active at a time.

In one example, the reference signal resource sets associated with the first TRP 450 may include a first set of SRS resources for 4 SRS ports, a second set of SRS resources for 2 SRS ports, and a third set of SRS resources for 1 SRS port. Continuing with this example, the reference signal resource sets associated with the second TRP 460 may include a first set of SRS resources for 2 SRS ports and a second set of SRS resources for 1 SRS port.

In some examples, the plurality of reference signal resource sets includes a first reference signal resource set associated with a first TRP of the plurality of TRPs, wherein the first reference signal resource set includes a first plurality of reference signal resource lists. In some examples, each of the first plurality of reference signal resource lists includes a different maximum number of uplink reference signal ports for an antenna panel of the at least two antenna panels, and wherein one of the first plurality of reference signal resource lists is active at a time.

The plurality of reference signal resource sets further includes a second reference signal resource set associated with a second TRP of the plurality of TRPs, wherein the second reference signal resource set includes a second plurality of reference signal resource lists. In some examples, each of the second plurality of reference signal resource lists includes a different maximum number of uplink reference signal ports for an antenna panel of the at least two antenna panels, and wherein one of the second plurality of reference signal resource lists is active at a time.

In one example, with reference to Table 3, the first SRS set (SRS Set 1) includes two SRS resource lists. For example, a first SRS resource list may be associated with a reference signal resource list identifier SRS Resource List_11 and a second SRS resource list may be associated with a reference signal resource list identifier SRS Resource List_12. The first SRS resource list (SRS Resource List_11) in SRS Set 1 may include 4 SRS resources and 4 SRS ports per SRS resource. The second SRS resource list (SRS Resource List_12) in SRS Set 1 may include 2 SRS resources and 2 SRS ports per SRS resource.

In one example, with reference to Table 4, the second SRS set (SRS Set 2) includes two SRS resource lists. For example, a first SRS resource list may be associated with a reference signal resource list identifier SRS Resource List_21 and a second SRS resource list may be associated with a reference signal resource list identifier SRS Resource List_22. The first SRS resource list (SRS Resource List_21) in SRS Set 2 may include 4 SRS resources and 4 SRS ports per SRS resource. The second SRS resource list (SRS Resource List_22) in SRS Set 2 may include 2 SRS resources and 2 SRS ports per SRS resource.

With reference to FIG. 7B, if the at least two TRPs are symmetric (e.g., at 710), the UE at 712 receives a message for updating an uplink reference signal resource configuration associated with at least two TRPs of the plurality of TRPs. For example, the message for updating an uplink reference signal resource configuration associated with at least two TRPs of the plurality of TRPs may be the SRS set update message 522, 534 described with reference to FIG. 5B.

At 714, the UE determines an updated uplink reference signal resource configuration that applies to the at least two TRPs of the plurality of TRPs in the message based on an active reference signal resource configuration associated with the at least two TRPs of the plurality of TRPs.

For example, an updated uplink reference signal resource configuration may be indicated in an SRS resource indicator (SRI) field and/or a transmitted precoding matrix indicator (TPMI) field in DCI. The UE 402 may dynamically determine an SRI field and a TPMI field in DCI for each of multiple TRPs based on the active reference signal resource configuration associated with the multiple TRPs. For example, an active SRS configuration for an antenna panel of the UE 402 with respect to a TRP may set a certain number of SRS ports and TPMI ports, which may define the size (e.g., field length) of an SRI field and TPMI field in DCI, and the codepoints in DCI.

In some examples, the updated uplink reference signal resource configuration includes at least one of a capability value set identifier (ID), a sounding reference signal (SRS) set identifier (ID), or an SRS resource list identifier (ID).

With reference to FIG. 7B, if the at least two TRPs are not symmetric at 710 (e.g., the at least two TRPs are asymmetric), the UE at 716 receives a message for updating at least a first uplink reference signal resource configuration associated with a first TRP of the plurality of TRPs and a second uplink reference signal resource configuration associated with a second TRP of the plurality of TRPs. For example, the message for updating at least the first uplink reference signal resource configuration may be the SRS set update message 550, 562, and the message for updating the second uplink reference signal resource configuration may be the SRS set update message 556.

At 718, the UE determines a first updated uplink reference signal resource configuration that applies to the first TRP in the message based on a first active uplink reference signal resource configuration associated with the first TRP. In some examples, the first updated uplink reference signal resource configuration includes at least one of a first capability value set identifier (ID), a first sounding reference signal (SRS) set identifier (ID), or a first SRS resource list identifier (ID).

At 720, the UE determines a second updated uplink reference signal resource configuration that applies to the second TRP in the message based on a second active uplink reference signal resource configuration associated with the second TRP. In some examples, the second updated uplink reference signal resource configuration includes at least one of a second capability value set identifier (ID), a second sounding reference signal (SRS) set identifier (ID), or a second SRS resource list identifier (ID).

For example, an updated uplink reference signal resource configuration may be indicated in an SRS resource indicator (SRI) field and/or a transmitted precoding matrix indicator (TPMI) field in DCI. The UE 402 may dynamically determine an SRI field and a TPMI field in DCI for each of multiple TRPs based on the active reference signal resource configuration associated with the multiple TRPs. For example, an active SRS configuration for an antenna panel of the UE 402 with respect to a TRP may set a certain number of SRS ports and TPMI ports, which may define the size (e.g., field length) of an SRI field and TPMI field in DCI, and the codepoints in DCI.

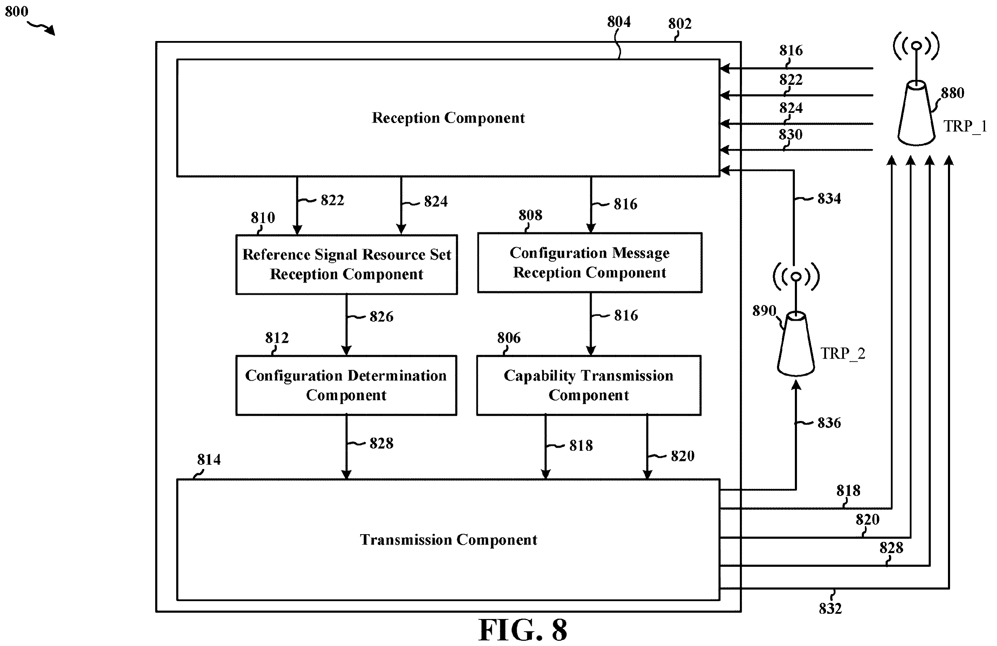

FIG. 8 is a conceptual data flow diagram 800 illustrating the data flow between different means/components in an example apparatus 802. The apparatus may be a UE.

The apparatus includes a reception component 804 that receives one or more downlink (DL) signals from one or more TRPs. For example, the reception component 804 may receive a DL signal 830 from TRP_1 880 and/or a DL signal 834 from TRP_2 890. In some examples, the DL signals 830, 834 may be different reference signals (e.g., different beamformed reference signals, such as CSI-RSs).

The apparatus includes a capability transmission component 806 that transmits a capability information message 818 (e.g., via the transmission component 814) including a plurality of capability value sets associated with the at least two antenna panels, wherein each capability value set in the plurality of capability value sets indicates at least a different maximum number of uplink reference signal ports for an antenna panel of the at least two antenna panels. In some examples, the capability information message 818 indicates support for symmetric antenna panels or asymmetric antenna panels for a beam reporting operation.

The capability transmission component 806 further transmits a capability indication message 820 (e.g., via the transmission component 814) indicating one or more of the plurality of capability value sets for a group of reference signal beams received from a plurality of TRPs (e.g., TRP_1 880 and TRP_2 890).

The apparatus includes a configuration message reception component 808 that receives a configuration message 816 that configures the apparatus to transmit a single capability value set that applies to two or more TRPs of the plurality of TRPs, or to transmit a first capability value set that applies to a first TRP of the plurality of TRPs and a second capability value set that applies to a second TRP of the plurality of TRPs.

The apparatus includes a reference signal resource set reception component 810 that receives, for each bandwidth part allocated to the apparatus, a plurality of reference signal resource sets 822 for the plurality of TRPs in response to the capability indication message 820. The reference signal resource set reception component 810 further receives a message 824 for updating an uplink reference signal resource configuration associated with at least two TRPs of the plurality of TRPs or for updating at least a first uplink reference signal resource configuration associated with a first TRP of the plurality of TRPs and a second uplink reference signal resource configuration associated with a second TRP of the plurality of TRPs.

The apparatus includes a configuration determination component 812 that determines an updated uplink reference signal resource configuration that applies to the at least two TRPs of the plurality of TRPs in the message based on an active reference signal resource configuration associated with the at least two TRPs of the plurality of TRPs. The configuration determination component 812 further determines a first updated uplink reference signal resource configuration that applies to the first TRP in the message based on a first active uplink reference signal resource configuration associated with the first TRP, and determines a second updated uplink reference signal resource configuration that applies to the second TRP in the message based on a second active uplink reference signal resource configuration associated with the second TRP.

The apparatus includes a transmission component 814 that transmits uplink (UL) signals to one or more TRPs. For example, the transmission component 814 may transmit a UL signal 832 to TRP_1 880 and/or a UL signal 836 to TRP_2 890.

The apparatus may include additional components that perform each of the blocks of the algorithm in the aforementioned flowcharts of FIGs. 6, 7A, 7B. As such, each block in the aforementioned flowcharts of FIGs. 6, 7A, 7B may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

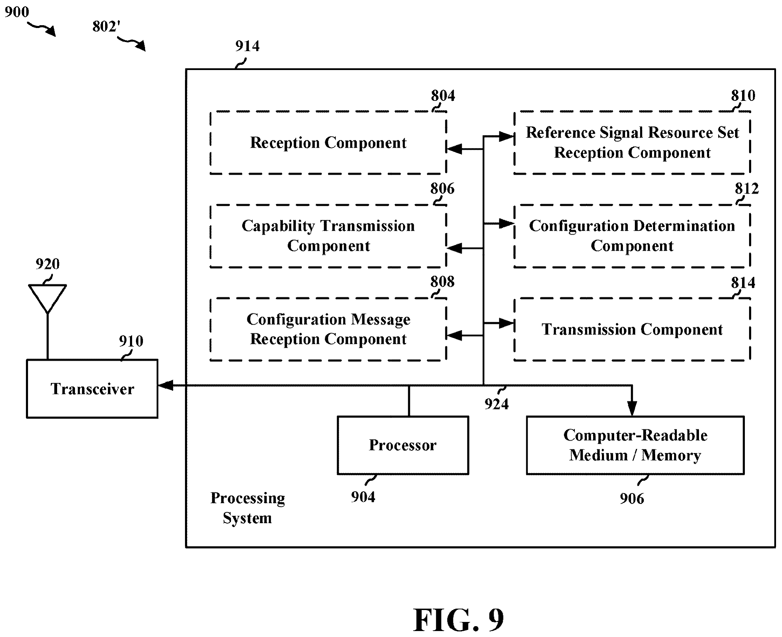

FIG. 9 is a diagram 900 illustrating an example of a hardware implementation for an apparatus 802' employing a processing system 914. The processing system 914 may be implemented with a bus architecture, represented generally by the bus 924. The bus 924 may include any number of interconnecting buses and bridges depending on the specific application of the processing system 914 and the overall design constraints. The bus 924 links together various circuits including one or more processors and/or hardware components, represented by the processor 904, the components 804, 806, 808, 810, 812, 814 and the computer-readable medium / memory 906. The bus 924 may also link various other circuits such as timing sources, peripherals, voltage regulators, and power management circuits, which are well known in the art, and therefore, will not be described any further.

The processing system 914 may be coupled to a transceiver 910. The transceiver 910 is coupled to one or more antennas 920. The transceiver 910 provides a means for communicating with various other apparatus over a transmission medium. The transceiver 910 receives a signal from the one or more antennas 920, extracts information from the received signal, and provides the extracted information to the processing system 914, specifically the reception component 804. In addition, the transceiver 910 receives information from the processing system 914, specifically the transmission component 814, and based on the received information, generates a signal to be applied to the one or more antennas 920. The processing system 914 includes a processor 904 coupled to a computer-readable medium / memory 906. The processor 904 is responsible for general processing, including the execution of software stored on the computer-readable medium / memory 906. The software, when executed by the processor 904, causes the processing system 914 to perform the various functions described *supra* for any particular apparatus. The computer-readable medium / memory 906 may also be used for storing data that is manipulated by the processor 904 when executing software. The processing system 914 further includes at least one of the components 804, 806, 808, 810, 812, 814. The components may be software components running in the processor 904, resident/stored in the computer readable medium / memory 906, one or more hardware components coupled to the processor 904, or some combination thereof. The processing system 914 may be a component of the UE 350 and may include the memory 360 and/or at least one of the TX processor 368, the RX processor 356, and the controller/processor 359. Alternatively, the processing system 914 may be the entire UE (e.g., see 350 of FIG. 3).

In one configuration, the apparatus 802/802' for wireless communication includes means for transmitting a capability information message including a plurality of capability value sets associated with the at least two antenna panels, wherein each capability value set in the plurality of capability value sets indicates at least a different maximum number of uplink reference signal ports for an antenna panel of the at least two antenna panels, means for transmitting a capability indication message indicating one or more of the plurality of capability value sets for a group of reference signal beams received from a plurality of TRPs, means for receiving a configuration message that configures the apparatus to transmit a single capability value set that applies to two or more TRPs of the plurality of TRPs, or to transmit a first capability value set that applies to a first TRP of the plurality of TRPs and a second capability value set that applies to a second TRP of the plurality of TRPs, means for receiving, for each bandwidth part allocated to the apparatus, a plurality of reference signal resource sets for the plurality of TRPs in response to the capability indication message, means for receiving a message for updating an uplink reference signal resource configuration associated with at least two TRPs of the plurality of TRPs, means for determining an updated uplink reference signal resource configuration that applies to the at least two TRPs of the plurality of TRPs in the message based on an active reference signal resource configuration associated with the at least two TRPs of the plurality of TRPs, means for receiving a message for updating at least a first uplink reference signal resource configuration associated with a first TRP of the plurality of TRPs and a second uplink reference signal resource configuration associated with a second TRP of the plurality of TRPs, means for determining a first updated uplink reference signal resource configuration that applies to the first TRP in the message based on a first active uplink reference signal resource configuration associated with the first TRP, and means for determining a second updated uplink reference signal resource configuration that applies to the second TRP in the message based on a second active uplink reference signal resource configuration associated with the second TRP.

The aforementioned means may be one or more of the aforementioned components of the apparatus 802 and/or the processing system 914 of the apparatus 802' configured to perform the functions recited by the aforementioned means. As described *supra,* the processing system 914 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

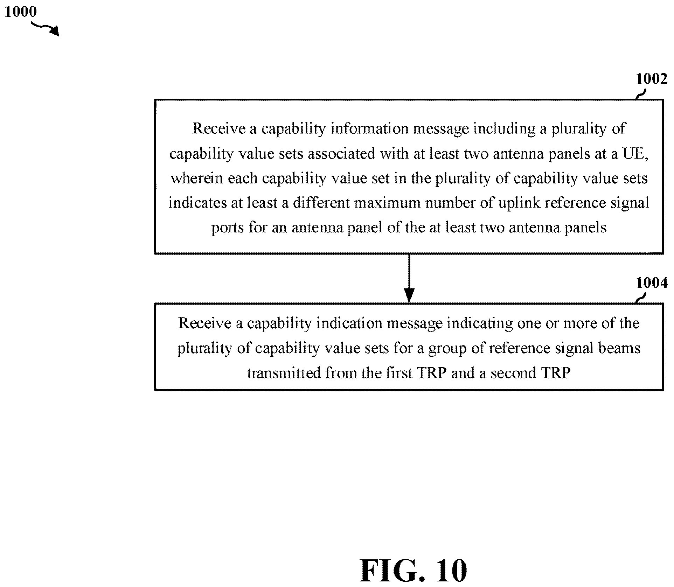

FIG. 10 includes a flowchart 1000 of a method of wireless communication. The method may be performed by a TRP (e.g., the first TRP 450; the apparatus 1202/1202'; the processing system 1314, which may include the memory 376 and which may be the entire TRP or a component of the TRP, such as the TX processor 316, the RX processor 370, and/or the controller/processor 375).

At 1002, the first TRP receives a capability information message including a plurality of capability value sets associated with at least two antenna panels at a UE, wherein each capability value set in the plurality of capability value sets indicates at least a different maximum number of uplink reference signal ports for an antenna panel of the at least two antenna panels.

For example, with reference to FIG. 5A, the first TRP 450 may receive the capability information message 504 from the UE 402. In one example, the plurality of capability value sets may include three different UE capability value set IDs (e.g., UE Capability Value Set_1, UE Capability Value Set_2, and UE Capability Value Set_3). Each of the UE capability value set IDs may be associated with at least a maximum supported number of uplink reference signal ports as described with reference to Table 1.

Finally, at 1004, the first TRP receives a capability indication message indicating one or more of the plurality of capability value sets for a group of reference signal beams transmitted from the first TRP and a second TRP. In some examples, the capability indication message includes one or more capability value set identifiers (IDs), and wherein each capability value set in the plurality of capability value sets further indicates at least one of a maximum uplink rank or a coherence type associated with the group of reference signal beams received from the first apparatus and the second apparatus.

In some examples, the capability indication message may be the beam reporting message 512 which indicates one or more UE capability value sets for each group of beams. In one example, if the first and third antenna panels 404, 408 are symmetric with respect to the first and second TRPs 450, 460, the UE 402 may indicate a single UE capability value set ID for a group of beams, such as UE Capability Value Set_1 associated with 1 port, which may apply to both the first and third antenna panels 404, 408. In one example, if the first and third antenna panels 404, 408 are asymmetric with respect to the first and second TRPs 450, 460, the UE 402 may indicate multiple UE capability value set IDs for a group of beams, such as the UE Capability Value Set_1 associated with 4 ports for the first antenna panel 404 and the UE Capability Value Set_3 associated with 1 port for the third antenna panel 408.

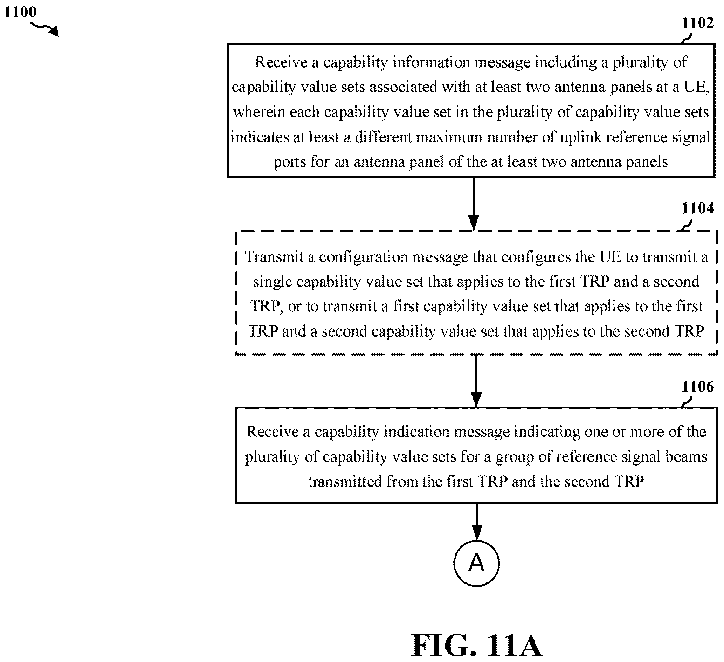

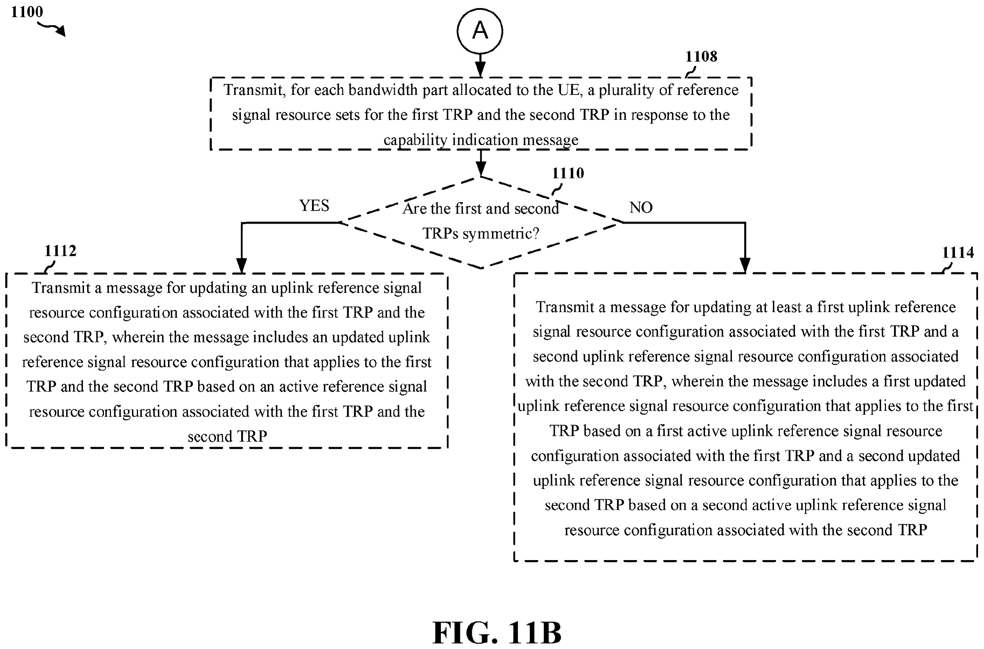

FIGS. 11A and 11B include a flowchart 1100 of a method of wireless communication. The method may be performed by a first TRP (e.g., the first TRP 450; the apparatus 1202/1202'; the processing system 1314, which may include the memory 376 and which may be the entire TRP or a component of the TRP, such as the TX processor 316, the RX processor 370, and/or the controller/processor 375). In FIGS. 11A and 11B, operations indicated with dashed lines represent optional operations.

With reference to FIG. 11A, at 1102, the first TRP receives a capability information message including a plurality of capability value sets associated with at least two antenna panels at a UE, wherein each capability value set in the plurality of capability value sets indicates at least a different maximum number of uplink reference signal ports for an antenna panel of the at least two antenna panels.

For example, with reference to FIG. 5A, the first TRP 450 may receive the capability information message 504 from the UE 402. In one example, the plurality of capability value sets may include three different UE capability value set IDs (e.g., UE Capability Value Set_1, UE Capability Value Set_2, and UE Capability Value Set_3). Each of the UE capability value set IDs may be associated with at least a maximum supported number of uplink reference signal ports as described with reference to Table 1.

At 1104, the first TRP transmits a configuration message that configures the UE to transmit a single capability value set that applies to the first TRP and a second TRP, or to transmit a first capability value set that applies to the first TRP and a second capability value set that applies to the second TRP.

For example, with reference to FIG. 5A, the first TRP 450 may transmit the configuration information message 506 to the UE 402. The configuration information message 506 may include a beam reporting configuration for a beam reporting instance of the UE 402 based on the capability information message 504. For example, if the capability information message 504 indicates that the UE 402 supports symmetric antenna panels and asymmetric antenna panels for a beam reporting operation, the beam reporting configuration may configure the UE 402 to report one capability value set for two or more symmetric antenna panels or to report different capability value sets for two or more asymmetric antenna panels.

At 1106, the first TRP receives a capability indication message indicating one or more of the plurality of capability value sets for a group of reference signal beams transmitted from the first TRP and the second TRP. In some examples, the capability indication message includes one or more capability value set identifiers (IDs), and wherein each capability value set in the plurality of capability value sets further indicates at least one of a maximum uplink rank or a coherence type associated with the group of reference signal beams received from the first apparatus and the second apparatus.

In some examples, the capability indication message may be the beam reporting message 512 which indicates one or more UE capability value sets for each group of beams. In one example, if the first and third antenna panels 404, 408 are symmetric with respect to the first and second TRPs 450, 460, the UE 402 may indicate a single UE capability value set ID for a group of beams, such as UE Capability Value Set_1 associated with 1 port, which may apply to both the first and third antenna panels 404, 408. In one example, if the first and third antenna panels 404, 408 are asymmetric with respect to the first and second TRPs 450, 460, the UE 402 may indicate multiple UE capability value set IDs for a group of beams, such as the UE Capability Value Set_1 associated with 4 ports for the first antenna panel 404 and the UE Capability Value Set_3 associated with 1 port for the third antenna panel 408.

With reference to FIG. 11B, at 1108, the first TRP transmits, for each bandwidth part allocated to the UE, a plurality of reference signal resource sets for the first TRP and the second TRP in response to the capability indication message.

For example, with reference to FIG. 5A, the first TRP 450 may transmit a message 514 including reference signal resource sets for the first and second TRPs 450, 460 in response to the beam reporting message 512 (e.g., the capability indication message).

In some examples, the plurality of reference signal resource sets includes a first plurality of reference signal resource sets (e.g., SRS sets) associated with the first TRP of the plurality of TRPs, and a second plurality of reference signal resource sets (e.g., SRS sets) associated with the second TRP of the plurality of TRPs.

In some examples, each of the first plurality of reference signal resource sets includes a different maximum number of uplink reference signal ports for an antenna panel of the at least two antenna panels, and wherein one of the first plurality of reference signal resource sets is active at a time. Each of the second plurality of reference signal resource sets includes a different maximum number of uplink reference signal ports for an antenna panel of the at least two antenna panels, and wherein one of the second plurality of reference signal resource sets is active at a time.

In one example, the reference signal resource sets associated with the first TRP 450 may include a first set of SRS resources for 4 SRS ports, a second set of SRS resources for 2 SRS ports, and a third set of SRS resources for 1 SRS port. Continuing with this example, the reference signal resource sets associated with the second TRP 460 may include a first set of SRS resources for 2 SRS ports and a second set of SRS resources for 1 SRS port.

In some examples, the plurality of reference signal resource sets includes a first reference signal resource set associated with a first TRP of the plurality of TRPs, wherein the first reference signal resource set includes a first plurality of reference signal resource lists. In some examples, each of the first plurality of reference signal resource lists includes a different maximum number of uplink reference signal ports for an antenna panel of the at least two antenna panels, and wherein one of the first plurality of reference signal resource lists is active at a time.

The plurality of reference signal resource sets further includes a second reference signal resource set associated with the second TRP of the plurality of TRPs, wherein the second reference signal resource set includes a second plurality of reference signal resource lists. In some examples, each of the second plurality of reference signal resource lists includes a different maximum number of uplink reference signal ports for an antenna panel of the at least two antenna panels, and wherein one of the second plurality of reference signal resource lists is active at a time.

In one example, with reference to Table 3, the first SRS set (SRS Set 1) includes two SRS resource lists. For example, a first SRS resource list may be associated with a reference signal resource list identifier SRS Resource List_11 and a second SRS resource list may be associated with a reference signal resource list identifier SRS Resource List_12. The first SRS resource list (SRS Resource List_11) in SRS Set 1 may include 4 SRS resources and 4 SRS ports per SRS resource. The second SRS resource list (SRS Resource List_12) in SRS Set 1 may include 2 SRS resources and 2 SRS ports per SRS resource.

In one example, with reference to Table 4, the second SRS set (SRS Set 2) includes two SRS resource lists. For example, a first SRS resource list may be associated with a reference signal resource list identifier SRS Resource List_21 and a second SRS resource list may be associated with a reference signal resource list identifier SRS Resource List_22. The first SRS resource list (SRS Resource List_21) in SRS Set 2 may include 4 SRS resources and 4 SRS ports per SRS resource. The second SRS resource list (SRS Resource List_22) in SRS Set 2 may include 2 SRS resources and 2 SRS ports per SRS resource.

If the first TRP and the second TRP are symmetric (e.g., at 1110), the first TRP, at 1112, transmits a message for updating an uplink reference signal resource configuration associated with the first TRP and the second TRP, wherein the message includes an updated uplink reference signal resource configuration that applies to the first TRP and the second TRP based on an active reference signal resource configuration associated with the first TRP and the second TRP. For example, the message for updating an uplink reference signal resource configuration associated with at least two TRPs of the plurality of TRPs may be the SRS set update message 522, 534 described with reference to FIG. 5B.

If the first TRP and the second TRP are not symmetric at 1110 (e.g., the first TRP and the second TRP are asymmetric), the first TRP, at 1114, transmits a message for updating at least a first uplink reference signal resource configuration associated with the first TRP and a second uplink reference signal resource configuration associated with the second TRP, wherein the message includes a first updated uplink reference signal resource configuration that applies to the first TRP based on a first active uplink reference signal resource configuration associated with the first TRP and a second updated uplink reference signal resource configuration that applies to the second TRP based on a second active uplink reference signal resource configuration associated with the second TRP. For example, the message for updating at least the first uplink reference signal resource configuration may be the SRS set update message 550, 562, and the message for updating the second uplink reference signal resource configuration may be the SRS set update message 556.

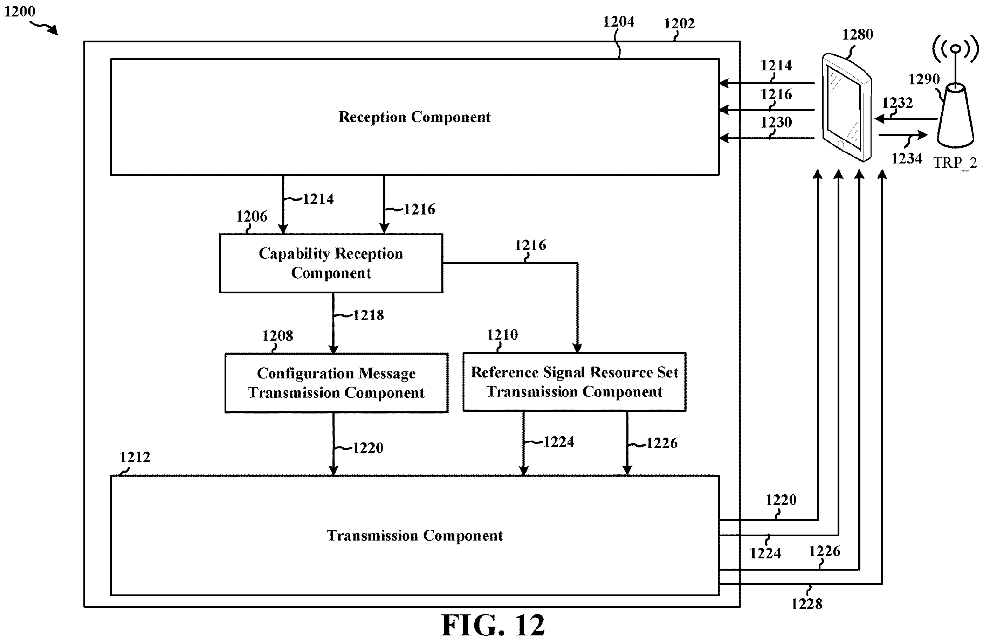

FIG. 12 is a conceptual data flow diagram 1200 illustrating the data flow between different means/components in an example apparatus 1202. The apparatus may be a first TRP.

The apparatus may include a reception component 1204 that receives uplink (UL) signals from the UE 1280. For example, the reception component 1204 may receive a UL signal 1230 from the UE 1280.

The apparatus may include a capability reception component 1206 that receives a capability information message 1214 from the UE 1280 (e.g., via the reception component 1204). The capability information message 1214 includes a plurality of capability value sets associated with at least two antenna panels at the UE 1280, wherein each capability value set in the plurality of capability value sets indicates at least a different maximum number of uplink reference signal ports for an antenna panel of the at least two antenna panels. The capability reception component 1206 further receives a capability indication message 1216 from the UE 1280 (e.g., via the reception component 1204). The capability indication message 1216 indicates one or more of the plurality of capability value sets for a group of reference signal beams transmitted from the first apparatus and a second apparatus (e.g., a second TRP (TRP_2) 1290).

In some examples, the capability information message 1214 may indicate support for symmetric antenna panels or asymmetric antenna panels for a beam reporting operation. The capability reception component 1206 may transmit information 1218 indicating whether the UE 1280 supports symmetric antenna panels or asymmetric antenna panels for a beam reporting operation.

The apparatus may include a configuration message transmission component 1208 that transmits a configuration message 1220 to the UE 1280 (e.g., via the transmission component 1212) that configures the UE 1280 to transmit a single capability value set that applies to the first apparatus and the second apparatus (e.g., if the UE 1280 supports symmetric antenna panels for a beam reporting operation based on the information 1218), or to transmit a first capability value set that applies to the first apparatus and a second capability value set that applies to the second apparatus (e.g., if the UE 1280 supports asymmetric antenna panels for a beam reporting operation based on the information 1218).

The apparatus may include a reference signal resource set transmission component 1210 that transmits, for each bandwidth part allocated to the UE 1280, a plurality of reference signal resource sets 1224 (e.g., via the transmission component 1212) for the first apparatus and the second apparatus in response to the capability indication message 1216. The reference signal resource set transmission component 1210 further transmits a message 1226 to the UE 1280 (e.g., via the transmission component 1212).

In some examples, the message 1226 updates an uplink reference signal resource configuration associated with the first apparatus and the second apparatus, wherein the message 1226 includes an updated uplink reference signal resource configuration that applies to the first apparatus and the second apparatus based on an active reference signal resource configuration associated with the first apparatus and the second apparatus. In some examples, the message 1226 updates at least a first uplink reference signal resource configuration associated with the first apparatus and a second uplink reference signal resource configuration associated with the second apparatus, wherein the message 1226 includes a first updated uplink reference signal resource configuration that applies to the first apparatus based on a first active uplink reference signal resource configuration associated with the first apparatus and a second updated uplink reference signal resource configuration that applies to the second apparatus based on a second active uplink reference signal resource configuration associated with the second apparatus.

The apparatus may include a transmission component 1212 that transmits DL signals to the UE 1280. For example, the transmission component 1212 may transmit a DL signal 1228 to the UE 1280. In some examples, the DL signal 1228 may be a reference signal (e.g., a beamformed reference signal, such as a CSI-RS).

The UE 1280 may receive a DL signal (e.g., DL signal 1232) from the second apparatus (e.g., TRP_2 1290), and may transmit a UL signal (e.g., UL signal 1234) to the second apparatus (e.g., TRP_2 1290). In some examples, the DL signal 1232 may be a reference signal (e.g., a beamformed reference signal, such as a CSI-RS).

The apparatus may include additional components that perform each of the blocks of the algorithm in the aforementioned flowcharts of FIGs. 10, 11A, 11B. As such, each block in the aforementioned flowcharts of FIGs. 10, 11A, 11B may be performed by a component and the apparatus may include one or more of those components. The components may be one or more hardware components specifically configured to carry out the stated processes/algorithm, implemented by a processor configured to perform the stated processes/algorithm, stored within a computer-readable medium for implementation by a processor, or some combination thereof.

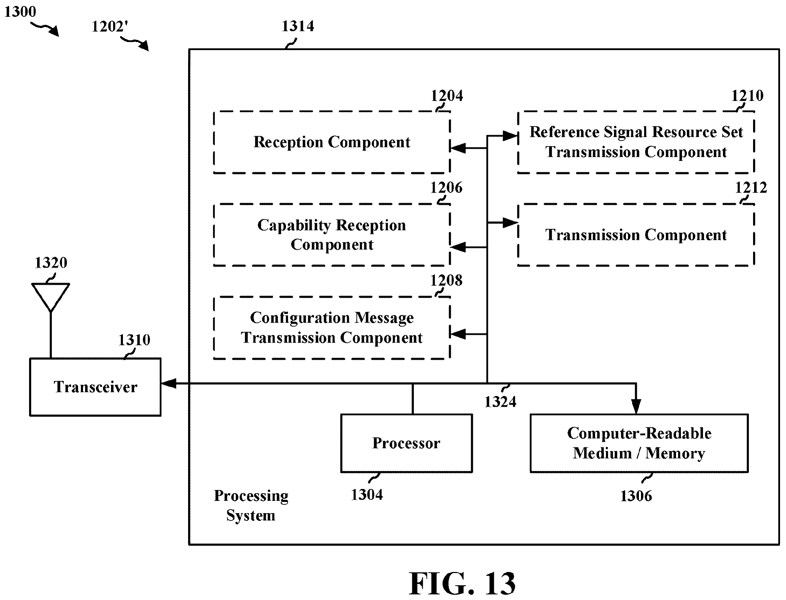

FIG. 13 is a diagram 1300 illustrating an example of a hardware implementation for an apparatus 1202' employing a processing system 1314. The processing system 1314 may be implemented with a bus architecture, represented generally by the bus 1324. The bus 1324 may include any number of interconnecting buses and bridges depending on the specific application of the processing system 1314 and the overall design constraints. The bus 1324 links together various circuits including one or more processors and/or hardware components, represented by the processor 1304, the components 1204, 1206, 1208, 1210, 1212, and the computer-readable medium / memory 1306. The bus 1324 may also link various other circuits such as timing sources, peripherals, voltage regulators, and power management circuits, which are well known in the art, and therefore, will not be described any further.

The processing system 1314 may be coupled to a transceiver 1310. The transceiver 1310 is coupled to one or more antennas 1320. The transceiver 1310 provides a means for communicating with various other apparatus over a transmission medium. The transceiver 1310 receives a signal from the one or more antennas 1320, extracts information from the received signal, and provides the extracted information to the processing system 1314, specifically the reception component 1204. In addition, the transceiver 1310 receives information from the processing system 1314, specifically the transmission component 1212, and based on the received information, generates a signal to be applied to the one or more antennas 1320. The processing system 1314 includes a processor 1304 coupled to a computer-readable medium / memory 1306. The processor 1304 is responsible for general processing, including the execution of software stored on the computer-readable medium / memory 1306. The software, when executed by the processor 1304, causes the processing system 1314 to perform the various functions described *supra* for any particular apparatus. The computer-readable medium / memory 1306 may also be used for storing data that is manipulated by the processor 1304 when executing software. The processing system 1314 further includes at least one of the components 1204, 1206, 1208, 1210, 1212. The components may be software components running in the processor 1304, resident/stored in the computer readable medium / memory 1306, one or more hardware components coupled to the processor 1304, or some combination thereof. The processing system 1314 may be a component of a TRP and may include the memory 376 and/or at least one of the TX processor 316, the RX processor 370, and the controller/processor 375. Alternatively, the processing system 1314 may be the entire TRP (e.g., see 310 of FIG. 3).

In one configuration, the apparatus 1202/1202' for wireless communication includes means for receiving a capability information message including a plurality of capability value sets associated with at least two antenna panels at a user equipment (UE), wherein each capability value set in the plurality of capability value sets indicates at least a different maximum number of uplink reference signal ports for an antenna panel of the at least two antenna panels, means for receiving a capability indication message indicating one or more of the plurality of capability value sets for a group of reference signal beams transmitted from the first apparatus and a second apparatus, means for transmitting a configuration message that configures the UE to transmit a single capability value set that applies to the first apparatus and the second apparatus, or to transmit a first capability value set that applies to the first apparatus and a second capability value set that applies to the second apparatus, means for transmitting, for each bandwidth part allocated to the UE, a plurality of reference signal resource sets for the first apparatus and the second apparatus in response to the capability indication message, means for transmitting a message for updating an uplink reference signal resource configuration associated with the first apparatus and the second apparatus, wherein the message includes an updated uplink reference signal resource configuration that applies to the first apparatus and the second apparatus based on an active reference signal resource configuration associated with the first apparatus and the second apparatus, means for transmitting a message for updating at least a first uplink reference signal resource configuration associated with the first apparatus and a second uplink reference signal resource configuration associated with the second apparatus, wherein the message includes a first updated uplink reference signal resource configuration that applies to the first apparatus based on a first active uplink reference signal resource configuration associated with the first apparatus and a second updated uplink reference signal resource configuration that applies to the second apparatus based on a second active uplink reference signal resource configuration associated with the second apparatus.

The aforementioned means may be one or more of the aforementioned components of the apparatus 1202 and/or the processing system 1314 of the apparatus 1202' configured to perform the functions recited by the aforementioned means. As described *supra,* the processing system 1314 may include the TX Processor 316, the RX Processor 370, and the controller/processor 375. As such, in one configuration, the aforementioned means may be the TX Processor 316, the RX Processor 370, and the controller/processor 375 configured to perform the functions recited by the aforementioned means.

The aspects described herein enable a UE to indicate the maximum supported number of uplink reference signal ports for multiple antenna panels associated with different TRPs to facilitate fast antenna panel selection for the UE. For example, the UE may transmit a capability indication message indicating one or more capability value sets (e.g., each capability value set indicating a different maximum supported number of uplink reference signal ports for an antenna panel) for a group of reference signal beams received from multiple TRPs.

For example, when the UE indicates the maximum supported number of uplink reference signal ports for multiple antenna panels for each beam group, the UE effectively selects the antenna panels to be used for uplink transmissions to multiple TRPs. A base station associated with one or more of the multiple TRPs may select antenna panels for uplink transmissions at the UE based on the indicated maximum supported number of uplink reference signal ports for the multiple antenna panels or may select different antenna panels.

The following provides an overview of aspects of the present disclosure:
Aspect 1: An apparatus for wireless communication, comprising: a memory; and at least one processor coupled to the memory and configured to transmit a capability information message including a plurality of capability value sets associated with the at least two antenna panels, wherein each capability value set in the plurality of capability value sets indicates at least a different maximum number of uplink reference signal ports for an antenna panel of the at least two antenna panels; and transmit a capability indication message indicating one or more of the plurality of capability value sets for a group of reference signal beams received from a plurality of transmission reception points (TRPs).
Aspect 2: The apparatus of aspect 1, wherein the one or more of the plurality of capability value sets includes a capability value set that applies to two or more TRPs of the plurality of TRPs.
Aspect 3: The apparatus of aspect 1, wherein the one or more of the plurality of capability value sets includes: a first capability value set that applies to a first TRP of the plurality of TRPs; and a second capability value set that applies to a second TRP of the plurality of TRPs.
Aspect 4: The apparatus of any of aspects 1 through 3, wherein the capability indication message includes one or more capability value set identifiers, and wherein each capability value set in the plurality of capability value sets further indicates at least one of a maximum uplink rank or a coherence type associated with the group of reference signal beams received from the plurality of TRPs.
Aspect 5: The apparatus of any of aspects 1 through 4, wherein the capability information message indicates support for symmetric antenna panels or asymmetric antenna panels for a beam reporting operation.
Aspect 6: The apparatus of any of aspects 1 through 5, wherein the at least one processor is further configured to: receive a configuration message that configures the apparatus to transmit a single capability value set that applies to two or more TRPs of the plurality of TRPs, or to transmit a first capability value set that applies to a first TRP of the plurality of TRPs and a second capability value set that applies to a second TRP of the plurality of TRPs.
Aspect 7: The apparatus of any of aspects 1 through 6, wherein the at least one processor is further configured to: receive, for each bandwidth part allocated to the apparatus, a plurality of reference signal resource sets for the plurality of TRPs in response to the capability indication message.
Aspect 8: The apparatus of any of aspects 1 through 7, wherein the plurality of reference signal resource sets includes: a first plurality of reference signal resource sets associated with a first TRP of the plurality of TRPs, and a second plurality of reference signal resource sets associated with a second TRP of the plurality of TRPs.
Aspect 9: The apparatus of any of aspects 1 through 8, wherein each of the first plurality of reference signal resource sets includes a different maximum number of uplink reference signal ports for an antenna panel of the at least two antenna panels, and wherein one of the first plurality of reference signal resource sets is active at a time.
Aspect 10: The apparatus of any of aspects 1 through 9, wherein each of the second plurality of reference signal resource sets includes a different maximum number of uplink reference signal ports for an antenna panel of the at least two antenna panels, and wherein one of the second plurality of reference signal resource sets is active at a time.
Aspect 11: The apparatus of aspect 1, wherein the plurality of reference signal resource sets includes: a first reference signal resource set associated with a first TRP of the plurality of TRPs, wherein the first reference signal resource set includes a first plurality of reference signal resource lists, and a second reference signal resource set associated with a second TRP of the plurality of TRPs, wherein the second reference signal resource set includes a second plurality of reference signal resource lists.
Aspect 12: The apparatus of aspect 1 or 11, wherein each of the first plurality of reference signal resource lists includes a different maximum number of uplink reference signal ports for an antenna panel of the at least two antenna panels, and wherein one of the first plurality of reference signal resource lists is active at a time.
Aspect 13: The apparatus of any of aspects 1, 11 and 12, wherein each of the second plurality of reference signal resource lists includes a different maximum number of uplink reference signal ports for an antenna panel of the at least two antenna panels, and wherein one of the second plurality of reference signal resource lists is active at a time.
Aspect 14: The apparatus of any of aspects 1 and 11 through 13, wherein the at least one processor is further configured to: receive a message for updating an uplink reference signal resource configuration associated with at least two TRPs of the plurality of TRPs; and determine an updated uplink reference signal resource configuration that applies to the at least two TRPs of the plurality of TRPs in the message based on an active reference signal resource configuration associated with the at least two TRPs of the plurality of TRPs.
Aspect 15: The apparatus of any of aspects 1 and 11 through 14, wherein the updated uplink reference signal resource configuration includes at least one of a capability value set identifier, a sounding reference signal (SRS) set identifier, or an SRS resource list identifier.
Aspect 16: The apparatus of any of aspects 1 and 11 through 13, wherein the at least one processor is further configured to: receive a message for updating at least a first uplink reference signal resource configuration associated with a first TRP of the plurality of TRPs and a second uplink reference signal resource configuration associated with a second TRP of the plurality of TRPs; determine a first updated uplink reference signal resource configuration that applies to the first TRP in the message based on a first active uplink reference signal resource configuration associated with the first TRP; and determine a second updated uplink reference signal resource configuration that applies to the second TRP in the message based on a second active uplink reference signal resource configuration associated with the second TRP.
Aspect 17: The apparatus of any of aspects 1, 11 through 13, and 16, wherein the first updated uplink reference signal resource configuration includes at least one of a first capability value set identifier, a first sounding reference signal (SRS) set identifier, or a first SRS resource list identifier, and wherein the second updated uplink reference signal resource configuration includes at least one of a second capability value set identifier, a second sounding reference signal (SRS) set identifier, or a second SRS resource list identifier.
Aspect 18: A first apparatus for wireless communication, comprising: a memory; and at least one processor coupled to the memory and configured to receive a capability information message including a plurality of capability value sets associated with at least two antenna panels at a user equipment (UE), wherein each capability value set in the plurality of capability value sets indicates at least a different maximum number of uplink reference signal ports for an antenna panel of the at least two antenna panels; and receive a capability indication message indicating one or more of the plurality of capability value sets for a group of reference signal beams transmitted from the first apparatus and a second apparatus.
Aspect 19: The apparatus of aspect 18, wherein the one or more of the plurality of capability value sets includes a capability value set that applies to the first apparatus and the second apparatus.
Aspect 20: The apparatus of aspect 18, wherein the one or more of the plurality of capability value sets includes a first capability value set that applies to the first apparatus, and a second capability value set that applies to the second apparatus.
Aspect 21: The apparatus of any of aspects 18 through 20, wherein the capability indication message includes one or more capability value set identifiers, and wherein each capability value set in the plurality of capability value sets further indicates at least one of a maximum uplink rank or a coherence type associated with the group of reference signal beams received from the first apparatus and the second apparatus.
Aspect 22: The apparatus of any of aspects 18 through 21, wherein the capability information message further indicates support for symmetric antenna panels or asymmetric antenna panels at the UE for a beam reporting operation.
Aspect 23: The apparatus of any of aspects 18 through 22, wherein the at least one processor is further configured to: transmit a configuration message that configures the UE to transmit a single capability value set that applies to the first apparatus and the second apparatus, or to transmit a first capability value set that applies to the first apparatus and a second capability value set that applies to the second apparatus.
Aspect 24: The apparatus of any of aspects 18 through 23, wherein the at least one processor is further configured to: transmit, for each bandwidth part allocated to the UE, a plurality of reference signal resource sets for the first apparatus and the second apparatus in response to the capability indication message.
Aspect 25: The apparatus of any of aspects 18 through 24, wherein the plurality of reference signal resource sets includes a first plurality of reference signal resource sets associated with the first apparatus, and a second plurality of reference signal resource sets associated with the second apparatus.
Aspect 26: The apparatus of any of aspects 18 through 25, wherein each of the first plurality of reference signal resource sets includes a different maximum number of uplink reference signal ports for an antenna panel of the at least two antenna panels, and wherein one of the first plurality of reference signal resource sets is active at a time.
Aspect 27: The apparatus of any of aspects 18 through 26, wherein each of the second plurality of reference signal resource sets includes a different maximum number of uplink reference signal ports for an antenna panel of the at least two antenna panels, and wherein one of the second plurality of reference signal resource sets is active at a time.
Aspect 28: The apparatus of aspect 18, wherein the plurality of reference signal resource sets includes a first reference signal resource set associated with the first apparatus, wherein the first reference signal resource set includes a first plurality of reference signal resource lists, and a second reference signal resource set associated with the second apparatus, wherein the second reference signal resource set includes a second plurality of reference signal resource lists.
Aspect 29: The apparatus aspect 18 or 28, wherein each of the first plurality of reference signal resource lists includes a different maximum number of uplink reference signal ports for an antenna panel of the at least two antenna panels, and wherein one of the first plurality of reference signal resource lists is active at a time.
Aspect 30: The apparatus of any of aspects 18, 28 and 29, wherein each of the second plurality of reference signal resource lists includes a different maximum number of uplink reference signal ports for an antenna panel of the at least two antenna panels, and wherein one of the second plurality of reference signal resource lists is active at a time.
Aspect 31: The apparatus of any of aspects 18 and 28 through 30, wherein the at least one processor is further configured to: transmit a message for updating an uplink reference signal resource configuration associated with the first apparatus and the second apparatus, wherein the message includes an updated uplink reference signal resource configuration that applies to the first apparatus and the second apparatus based on an active reference signal resource configuration associated with the first apparatus and the second apparatus.
Aspect 32: The apparatus of any of aspects 18 and 28 through 31, wherein the updated uplink reference signal resource configuration includes at least one of a capability value set identifier (ID), a sounding reference signal (SRS) set identifier (ID), or an SRS resource list identifier (ID).
Aspect 33: The apparatus of any of aspects 18 and 28 through 30, wherein the at least one processor is further configured to: transmit a message for updating at least a first uplink reference signal resource configuration associated with the first apparatus and a second uplink reference signal resource configuration associated with the second apparatus, wherein the message includes a first updated uplink reference signal resource configuration that applies to the first apparatus based on a first active uplink reference signal resource configuration associated with the first apparatus and a second updated uplink reference signal resource configuration that applies to the second apparatus based on a second active uplink reference signal resource configuration associated with the second apparatus.
Aspect 34: The apparatus of any of aspects 18, 28 through 31, and 33, wherein the first updated uplink reference signal resource configuration includes at least one of a first capability value set identifier (ID), a first sounding reference signal (SRS) set identifier (ID), or a first SRS resource list identifier (ID), and wherein the second updated uplink reference signal resource configuration includes at least one of a second capability value set identifier (ID), a second sounding reference signal (SRS) set identifier (ID), or a second SRS resource list identifier (ID).

It is understood that the specific order or hierarchy of blocks in the processes / flowcharts disclosed is an illustration of example approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

### STATEMENTS

Statement 1. An apparatus for wireless communication, comprising: at least two antenna panels; a memory; and at least one processor coupled to the memory and configured to: transmit a capability information message including a plurality of capability value sets associated with the at least two antenna panels, wherein each capability value set in the plurality of capability value sets indicates at least a different maximum number of uplink reference signal ports for an antenna panel of the at least two antenna panels; and transmit a capability indication message indicating one or more of the plurality of capability value sets for a group of reference signal beams received from a plurality of transmission reception points (TRPs).
Statement 2. The apparatus of Statement 1, wherein the one or more of the plurality of capability value sets includes a capability value set that applies to two or more TRPs of the plurality of TRPs.
Statement 3. The apparatus of Statement 1, wherein the one or more of the plurality of capability value sets includes: a first capability value set that applies to a first TRP of the plurality of TRPs; and a second capability value set that applies to a second TRP of the plurality of TRPs.
Statement 4. The apparatus of Statement 1, wherein the capability indication message includes one or more capability value set identifiers, and wherein each capability value set in the plurality of capability value sets further indicates at least one of a maximum uplink rank or a coherence type associated with the group of reference signal beams received from the plurality of TRPs.
Statement 5. The apparatus of Statement 1, wherein the capability information message indicates support for symmetric antenna panels or asymmetric antenna panels for a beam reporting operation.
Statement 6. The apparatus of Statement 1, wherein the at least one processor is further configured to: receive a configuration message that configures the apparatus to transmit a single capability value set that applies to two or more TRPs of the plurality of TRPs, or to transmit a first capability value set that applies to a first TRP of the plurality of TRPs and a second capability value set that applies to a second TRP of the plurality of TRPs.
Statement 7. The apparatus of Statement 1, wherein the at least one processor is further configured to: receive, for each bandwidth part allocated to the apparatus, a plurality of reference signal resource sets for the plurality of TRPs in response to the capability indication message.
Statement 8. The apparatus of Statement 7, wherein the plurality of reference signal resource sets includes: a first plurality of reference signal resource sets associated with a first TRP of the plurality of TRPs, and a second plurality of reference signal resource sets associated with a second TRP of the plurality of TRPs.
Statement 9. The apparatus of Statement 8, wherein each of the first plurality of reference signal resource sets includes a different maximum number of uplink reference signal ports for an antenna panel of the at least two antenna panels, and wherein one of the first plurality of reference signal resource sets is active at a time.
Statement 10. The apparatus of Statement 8, wherein each of the second plurality of reference signal resource sets includes a different maximum number of uplink reference signal ports for an antenna panel of the at least two antenna panels, and wherein one of the second plurality of reference signal resource sets is active at a time.
Statement 11. The apparatus of Statement 7, wherein the plurality of reference signal resource sets includes: a first reference signal resource set associated with a first TRP of the plurality of TRPs, wherein the first reference signal resource set includes a first plurality of reference signal resource lists, and a second reference signal resource set associated with a second TRP of the plurality of TRPs, wherein the second reference signal resource set includes a second plurality of reference signal resource lists.
Statement 12. The apparatus of Statement 11, wherein each of the first plurality of reference signal resource lists includes a different maximum number of uplink reference signal ports for an antenna panel of the at least two antenna panels, and wherein one of the first plurality of reference signal resource lists is active at a time.
Statement 13. The apparatus of Statement 11, wherein each of the second plurality of reference signal resource lists includes a different maximum number of uplink reference signal ports for an antenna panel of the at least two antenna panels, and wherein one of the second plurality of reference signal resource lists is active at a time.
Statement 14. The apparatus of Statement 7, wherein the at least one processor is further configured to: receive a message for updating an uplink reference signal resource configuration associated with at least two TRPs of the plurality of TRPs; and determine an updated uplink reference signal resource configuration that applies to the at least two TRPs of the plurality of TRPs in the message based on an active reference signal resource configuration associated with the at least two TRPs of the plurality of TRPs.
Statement 15. The apparatus of Statement 14, wherein the updated uplink reference signal resource configuration includes at least one of a capability value set identifier, a sounding reference signal (SRS) set identifier, or an SRS resource list identifier.
Statement 16. The apparatus of Statement 7, wherein the at least one processor is further configured to: receive a message for updating at least a first uplink reference signal resource configuration associated with a first TRP of the plurality of TRPs and a second uplink reference signal resource configuration associated with a second TRP of the plurality of TRPs; determine a first updated uplink reference signal resource configuration that applies to the first TRP in the message based on a first active uplink reference signal resource configuration associated with the first TRP; and determine a second updated uplink reference signal resource configuration that applies to the second TRP in the message based on a second active uplink reference signal resource configuration associated with the second TRP.
Statement 17. The apparatus of Statement 16, wherein the first updated uplink reference signal resource configuration includes at least one of a first capability value set identifier, a first sounding reference signal (SRS) set identifier, or a first SRS resource list identifier, and wherein the second updated uplink reference signal resource configuration includes at least one of a second capability value set identifier, a second sounding reference signal (SRS) set identifier, or a second SRS resource list identifier.
Statement 18. A method of wireless communication for a user equipment (UE), comprising: transmitting a capability information message including a plurality of capability value sets associated with at least two antenna panels of the UE, wherein each capability value set in the plurality of capability value sets indicates at least a different maximum number of uplink reference signal ports for an antenna panel of the at least two antenna panels; and transmitting a capability indication message indicating one or more of the plurality of capability value sets for a group of reference signal beams received from a plurality of TRPs.
Statement 19. The method of Statement 18, wherein the one or more of the plurality of capability value sets includes a capability value set that applies to two or more TRPs of the plurality of TRPs.
Statement 20. The method of Statement 18, wherein the one or more of the plurality of capability value sets includes: a first capability value set that applies to a first TRP of the plurality of TRPs; and a second capability value set that applies to a second TRP of the plurality of TRPs.
Statement 21. The method of Statement 18, wherein the capability indication message includes one or more capability value set identifiers, and wherein each capability value set in the plurality of capability value sets further indicates at least one of a maximum uplink rank or a coherence type associated with the group of reference signal beams received from the plurality of TRPs.
Statement 22. The method of Statement 18, wherein the capability information message indicates support for symmetric antenna panels or asymmetric antenna panels for a beam reporting operation.
Statement 23. The method of Statement 18, further comprising: receiving a configuration message that configures the UE to transmit a single capability value set that applies to two or more TRPs of the plurality of TRPs, or to transmit a first capability value set that applies to a first TRP of the plurality of TRPs and a second capability value set that applies to a second TRP of the plurality of TRPs.
Statement 24. The method of Statement 18, further comprising: receiving, for each bandwidth part allocated to the UE, a plurality of reference signal resource sets for the plurality of TRPs in response to the capability indication message.
Statement 25. The method of Statement 24, wherein the plurality of reference signal resource sets includes: a first plurality of reference signal resource sets associated with a first TRP of the plurality of TRPs, and a second plurality of reference signal resource sets associated with a second TRP of the plurality of TRPs.
Statement 26. The method of Statement 25, wherein each of the first plurality of reference signal resource sets includes a different maximum number of uplink reference signal ports for an antenna panel of the at least two antenna panels, and wherein one of the first plurality of reference signal resource sets is active at a time.
Statement 27. The method of Statement 25, wherein each of the second plurality of reference signal resource sets includes a different maximum number of uplink reference signal ports for an antenna panel of the at least two antenna panels, and wherein one of the second plurality of reference signal resource sets is active at a time.
Statement 28. The method of Statement 24, wherein the plurality of reference signal resource sets includes: a first reference signal resource set associated with a first TRP of the plurality of TRPs, wherein the first reference signal resource set includes a first plurality of reference signal resource lists, and a second reference signal resource set associated with a second TRP of the plurality of TRPs, wherein the second reference signal resource set includes a second plurality of reference signal resource lists.
Statement 29. The method of Statement 28, wherein each of the first plurality of reference signal resource lists includes a different maximum number of uplink reference signal ports for an antenna panel of the at least two antenna panels, and wherein one of the first plurality of reference signal resource lists is active at a time.
Statement 30. The method of Statement 28, wherein each of the second plurality of reference signal resource lists includes a different maximum number of uplink reference signal ports for an antenna panel of the at least two antenna panels, and wherein one of the second plurality of reference signal resource lists is active at a time.
Statement 31. The method of Statement 24, further comprising: receiving a message for updating an uplink reference signal resource configuration associated with at least two TRPs of the plurality of TRPs; and determining an updated uplink reference signal resource configuration that applies to the at least two TRPs of the plurality of TRPs in the message based on an active reference signal resource configuration associated with the at least two TRPs of the plurality of TRPs.
Statement 32. The method of Statement 31, wherein the updated uplink reference signal resource configuration includes at least one of a capability value set identifier, a sounding reference signal (SRS) set identifier, or an SRS resource list identifier.
Statement 33. The method of Statement 24, further comprising: receiving a message for updating at least a first uplink reference signal resource configuration associated with a first TRP of the plurality of TRPs and a second uplink reference signal resource configuration associated with a second TRP of the plurality of TRPs; determining a first updated uplink reference signal resource configuration that applies to the first TRP in the message based on a first active uplink reference signal resource configuration associated with the first TRP; and determining a second updated uplink reference signal resource configuration that applies to the second TRP in the message based on a second active uplink reference signal resource configuration associated with the second TRP.
Statement 34. The method of Statement 33, wherein the first updated uplink reference signal resource configuration includes at least one of a first capability value set identifier, a first sounding reference signal (SRS) set identifier, or a first SRS resource list identifier, and wherein the second updated uplink reference signal resource configuration includes at least one of a second capability value set identifier, a second sounding reference signal (SRS) set identifier, or a second SRS resource list identifier.
Statement 35. A first apparatus for wireless communication, comprising: a memory; and at least one processor coupled to the memory and configured to: receive a capability information message including a plurality of capability value sets associated with at least two antenna panels at a user equipment (UE), wherein each capability value set in the plurality of capability value sets indicates at least a different maximum number of uplink reference signal ports for an antenna panel of the at least two antenna panels; and receive a capability indication message indicating one or more of the plurality of capability value sets for a group of reference signal beams transmitted from the first apparatus and a second apparatus.
Statement 36. The first apparatus of Statement 35, wherein the at least one processor is further configured to: transmit a configuration message that configures the UE to transmit a single capability value set that applies to the first apparatus and the second apparatus, or to transmit a first capability value set that applies to the first apparatus and a second capability value set that applies to the second apparatus.
Statement 37. The first apparatus of Statement 35, wherein the at least one processor is further configured to: transmit, for each bandwidth part allocated to the UE, a plurality of reference signal resource sets for the first apparatus and the second apparatus in response to the capability indication message.
Statement 38. The first apparatus of Statement 37, wherein the at least one processor is further configured to: transmit a message for updating an uplink reference signal resource configuration associated with the first apparatus and the second apparatus, wherein the message includes an updated uplink reference signal resource configuration that applies to the first apparatus and the second apparatus based on an active reference signal resource configuration associated with the first apparatus and the second apparatus.
Statement 39. The first apparatus of Statement 37, wherein the at least one processor is further configured to: transmit a message for updating at least a first uplink reference signal resource configuration associated with the first apparatus and a second uplink reference signal resource configuration associated with the second apparatus, wherein the message includes a first updated uplink reference signal resource configuration that applies to the first apparatus based on a first active uplink reference signal resource configuration associated with the first apparatus and a second updated uplink reference signal resource configuration that applies to the second apparatus based on a second active uplink reference signal resource configuration associated with the second apparatus.
Statement 40. A method for wireless communication for a first TRP, comprising: receiving a capability information message including a plurality of capability value sets associated with at least two antenna panels at a user equipment (UE), wherein each capability value set in the plurality of capability value sets indicates at least a different maximum number of uplink reference signal ports for an antenna panel of the at least two antenna panels; and receiving a capability indication message indicating one or more of the plurality of capability value sets for a group of reference signal beams transmitted from the first TRP and a second TRP.

## Claims

1. An apparatus for wireless communication, the apparatus comprising:
at least two antenna panels;
a memory; and
at least one processor coupled to the memory and configured to:
transmit a capability information message including a plurality of capability value sets associated with the at least two antenna panels, wherein each capability value set in the plurality of capability value sets indicates at least a different maximum number of uplink reference signal ports for an antenna panel of the at least two antenna panels;
transmit a capability indication message indicating one or more of the plurality of capability value sets for a group of reference signal beams received from a plurality of transmission reception points, TRPs; and
receive, for each bandwidth part allocated to the apparatus, a plurality of reference signal resource sets for the plurality of TRPs in response to the capability indication message.

2. The apparatus of claim 1, wherein the plurality of reference signal resource sets includes:
a first plurality of reference signal resource sets associated with a first TRP of the plurality of TRPs, and
a second plurality of reference signal resource sets associated with a second TRP of the plurality of TRPs.

3. The apparatus of claim 2, wherein each of the first plurality of reference signal resource sets includes a different maximum number of uplink reference signal ports for an antenna panel of the at least two antenna panels, and wherein one of the first plurality of reference signal resource sets is active at a time.

4. The apparatus of claim 2, wherein each of the second plurality of reference signal resource sets includes a different maximum number of uplink reference signal ports for an antenna panel of the at least two antenna panels, and wherein one of the second plurality of reference signal resource sets is active at a time.

5. The apparatus of claim 1, wherein the plurality of reference signal resource sets includes:
a first reference signal resource set associated with a first TRP of the plurality of TRPs, wherein the first reference signal resource set includes a first plurality of reference signal resource lists, and
a second reference signal resource set associated with a second TRP of the plurality of TRPs, wherein the second reference signal resource set includes a second plurality of reference signal resource lists.

6. The apparatus of claim 5, wherein each of the first plurality of reference signal resource lists includes a different maximum number of uplink reference signal ports for an antenna panel of the at least two antenna panels, and wherein one of the first plurality of reference signal resource lists is active at a time.

7. The apparatus of claim 5, wherein each of the second plurality of reference signal resource lists includes a different maximum number of uplink reference signal ports for an antenna panel of the at least two antenna panels, and wherein one of the second plurality of reference signal resource lists is active at a time.

8. The apparatus of claim 1, wherein the at least one processor is further configured to:
receive a message for updating an uplink reference signal resource configuration associated with at least two TRPs of the plurality of TRPs; and
determine an updated uplink reference signal resource configuration that applies to the at least two TRPs of the plurality of TRPs in the message based on an active reference signal resource configuration associated with the at least two TRPs of the plurality of TRPs.

9. The apparatus of claim 8, wherein the updated uplink reference signal resource configuration includes at least one of a capability value set identifier, a sounding reference signal, SRS, set identifier, or an SRS resource list identifier.

10. The apparatus of claim 1, wherein the at least one processor is further configured to:
receive a message for updating at least a first uplink reference signal resource configuration associated with a first TRP of the plurality of TRPs and a second uplink reference signal resource configuration associated with a second TRP of the plurality of TRPs;
determine a first updated uplink reference signal resource configuration that applies to the first TRP in the message based on a first active uplink reference signal resource configuration associated with the first TRP; and
determine a second updated uplink reference signal resource configuration that applies to the second TRP in the message based on a second active uplink reference signal resource configuration associated with the second TRP.

11. The apparatus of claim 10, wherein the first updated uplink reference signal resource configuration includes at least one of a first capability value set identifier, a first sounding reference signal, SRS, set identifier, or a first SRS resource list identifier, and wherein the second updated uplink reference signal resource configuration includes at least one of a second capability value set identifier, a second sounding reference signal, SRS, set identifier, or a second SRS resource list identifier.

12. A method of wireless communication for a user equipment, UE, the method comprising:
transmitting a capability information message including a plurality of capability value sets associated with at least two antenna panels of the UE, wherein each capability value set in the plurality of capability value sets indicates at least a different maximum number of uplink reference signal ports for an antenna panel of the at least two antenna panels;
transmitting a capability indication message indicating one or more of the plurality of capability value sets for a group of reference signal beams received from a plurality of TRPs; and
receiving, for each bandwidth part allocated to the UE, a plurality of reference signal resource sets for the plurality of TRPs in response to the capability indication message.

13. A first apparatus for wireless communication, the first apparatus comprising:
a memory;
at least a first transmission reception point, TRP; and
at least one processor coupled to the memory and configured to:
receive a capability information message including a plurality of capability value sets associated with at least two antenna panels at a user equipment, UE, wherein each capability value set in the plurality of capability value sets indicates at least a different maximum number of uplink reference signal ports for an antenna panel of the at least two antenna panels;
receive a capability indication message indicating one or more of the plurality of capability value sets for a group of reference signal beams transmitted from the first TRP and a second TRP; and
transmit, for each bandwidth part allocated to the UE, a plurality of reference signal resource sets for the first TRP and the second TRP in response to the capability indication message.

14. The first apparatus of claim 13, wherein the at least one processor is further configured to:
transmit a message for updating an uplink reference signal resource configuration associated with the first TRP and the second TRP, wherein the message includes an updated uplink reference signal resource configuration that applies to the first TRP and the second TRP based on an active reference signal resource configuration associated with the first TRP and the second TRP; or
transmit a message for updating at least a first uplink reference signal resource configuration associated with the first TRP and a second uplink reference signal resource configuration associated with the second TRP, wherein the message includes a first updated uplink reference signal resource configuration that applies to the first TRP based on a first active uplink reference signal resource configuration associated with the first TRP and a second updated uplink reference signal resource configuration that applies to the second TRP based on a second active uplink reference signal resource configuration associated with the second TRP.

15. A method for wireless communication for a first TRP, the method comprising:
receiving a capability information message including a plurality of capability value sets associated with at least two antenna panels at a user equipment, UE, wherein each capability value set in the plurality of capability value sets indicates at least a different maximum number of uplink reference signal ports for an antenna panel of the at least two antenna panels;
receiving a capability indication message indicating one or more of the plurality of capability value sets for a group of reference signal beams transmitted from the first TRP and a second TRP; and
transmitting, for each bandwidth part allocated to the UE, a plurality of reference signal resource sets for the first TRP and the second TRP in response to the capability indication message.
